# EUROPÄISCHE PATENTSCHRIFT

(11) **EP 1 286 774 B1**
(45) Veröffentlichungstag und Bekanntmachung des Hinweises auf die Patenterteilung: **22.02.2006**
(21) Anmeldenummer: 01955297.5
(22) Anmeldetag: 01.06.2001
(51) Int. Cl.: B01L 3/00, B01J 4/02

(54) **VORRICHTUNG UND VERFAHREN ZUR MANIPULATION KLEINER MATERIEMENGEN**
DEVICE AND METHOD FOR MANIPULATING SMALL QUANTITIES OF MATERIALS
DISPOSITIF ET PROCEDE PERMETTANT DE MANIPULER DE PETITES QUANTITES DE MATIERE

(30) Priorität: 09.06.2000 DE 10028625; 09.11.2000 DE 10055318
(43) Veröffentlichungstag der Anmeldung: 05.03.2003
(73) Patentinhaber: Advalytix AG, 85649 Brunnthal (DE)
(72) Erfinder: WIXFORTH, Achim, 80636 München (DE)
(74) Vertreter: Manitz, Finsterwald & Partner GbR
(86) Internationale Anmeldenummer: PCT/EP2001/006277
(87) Internationale Veröffentlichungsnummer: WO 2001/094017

(56) Entgegenhaltungen:
- US-A- 5 006 749
- US-A- 5 674 742
- US-A- 6 010 316
- PATENT ABSTRACTS OF JAPAN vol. 018, no. 281 (P-1744), 27. Mai 1994 (1994-05-27) & JP 06 050974 A (NEC CORP), 25. Februar 1994 (1994-02-25)

## Beschreibung

Die Erfindung betrifft eine Vorrichtung und ein Verfahren zur gerichteten und gezielten Manipulation kleiner Materiemengen auf einer Festkörperoberfläche und deren Verwendung.

Die Bewegung von kleinen Materiemengen wird zum gegenwärtigen Zeitpunkt vornehmlich im Bereich der Flüssigkeiten (Mikrofluidik) durchgeführt. So wird die Bewegung kleiner Flüssigkeitsmengen (und gleichzeitig auch darin enthaltener Schwebteilchen, wie biologischer Zellen) auf einem Chip bereits heute zur Analytik in der Biologie eingesetzt (Anne Y. Fu et al., Nature Biotechnology 17, Seite 1109 f. (1999)). Zur Verschiebung der kleinen Materiemengen bedient man sich einerseits konventioneller Pumpsysteme (auch miniaturisierter Pumpen), die definierte Flüssigkeitsmengen entlang durch Strukturierung von Festkörperoberflächen definierter Kanäle bewegen. Diese konventionellen Pumpsysteme beruhen im wesentlichen auf einer Miniaturisierung an sich bekannter Funktionseinheiten, die durch rein mechanische oder piezoelektrische Aktuatoren angetrieben werden. Hierbei werden u. a. Methoden der Mikromechanik eingesetzt, die auf einer erheblichen Miniaturisierung an sich bekannter Pumpmechanismen bzw. an sich bekannter hydraulischer und hydrodynamischer Funktionsblöcke wie Ventile, Turbinen, Düsen etc. beruhen. Eine andere in jüngerer Zeit entstandene Art des Flüssigkeitstransports beruht auf der Ausnutzung elektrokinetischer Verfahren, bei denen ein elektrisches Feld entlang eines definierten Kanals eine Bewegung der Flüssigkeit bewirkt (O. Müller, Laborwelt 1/2000, Seiten 36 bis 38). Aus US-Patent Nr. 5,674,742 und US 6,010,316 ist die Bewegung kleiner Flüssigkeitsmengen durch den Impulsübertrag einer longitudinalen Volumenschallwelle auf eine Flüssigkeit bekannt.

Bei elektroosmotischen Verfahren hängt die Geschwindigkeit der zu bewegenden Materiemenge in der Regel von der Kanalbreite ab. Zudem muß der Kanal grundsätzlich vollständig gefüllt sein. Zudem sind hohe Feldstärken zum Transport der kleinen Flüssigkeitsmengen erforderlich, die neben unerwünschten elektrochemischen und elektrobiologischen Effekten auch zu einer unvermeidbaren Jouleschen Erwärmung der zu bewegenden Materiemenge führt, die u. a. die Funktionalität des Trägermaterials beeinträchtigen kann.

Aufgabe der vorliegenden Erfindung ist es, eine Vorrichtung und ein Verfahren anzugeben, mit deren Hilfe die gezielte Manipulation und Bewegung kleinster Materiemengen auf und entlang der Oberfläche eines Festkörpers möglich ist, bei denen die Bewegung kleinster Materiemengen ohne bewegliche Teile möglich ist und die eine kostengünstige und einfache Herstellung und Verwendung ermöglichen.

Diese Aufgabe wird mit einem Verfahren mit den Merkmalen des Anspruchs 1 und eine Vorrichtung mit den Merkmalen des Anspruchs 29 erreicht.

Bei dem erfindungsgemäßen Verfahren werden mit Hilfe von mindestens einer Oberfiächenwellenerzeugungseinrichtung Oberflächenwellen generiert, deren Impuls mit mindestens einer Materiemenge in Wechselwirkung gebracht wird, um eine Bewegung in einer gewünschten Richtung zu bewirken. Die erfindungsgemäße Vorrichtung weist dazu mindestens eine Einrichtung zur Erzeugung von Oberflächenwellen auf der Festkörperoberfläche in zumindest einer Ausbreitungsrichtung und einen Wechselwirkungsbereich auf, in dem die Materiemenge mit der mindestens einen Oberflächenwelle in Wechselwirkung treten kann, um durch einen Impulsübertrag von der Oberflächenwelle oder den Oberflächenwellen eine Bewegung der Materiemenge zu bewirken. Dabei befindet sich die Materiemenge auf einem funktionalisierten Bereich der Oberfläche, der sich durch eine Modulation der Benetaungseigenschaften ergibt.

Mit dem erfindungsgemäßen Verfahren bzw. der erfindungsgemäßen Vorrichtung können kleinste Mengen von Materie an der Oberfläche eines Festkörpers mittels akustischer Oberflächenwellen gezielt bewegt bzw. manipuliert werden. Dabei umfaßt der Begriff "Materie" Gase, Flüssigkeiten, feste Stoffe, aber auch biologische Systeme, wie Zellen, Makromoleküle und genetisches Material sowie kleine Teilchen wie chemische Reagenzien, bzw. Mischungen, Lösungen oder Dispersionen aus diesen Stoffen. An der Oberfläche des Festkörpers wird mindestens eine akustische Oberflächenwelle generiert. Durch die Wechselwirkung von kleinen Teilchen, Flüssigkeiten oder Gasen mit der mechanischen periodischen Verformung der Oberfläche oder aber durch Wechselwirkung mit den die Welle begleitenden elektrischen Feldern werden diese Teilchen, Flüssigkeit oder Gase gezielt bewegt. Dabei sind Betrag und Richtung der jeweiligen Geschwindigkeit extern vorherstimmbar. Der Transport der Materie auf der Oberfläche des Festkörpers entlang frei wählbarer und gezielt einstellbarer Pfade wird also durch Impulsübertrag zwischen einer akustischen Oberflächenwelle und der zu transportierenden kleinen Materiemenge verursacht. Die Manipulation bzw. die Bewegung der kleinen Materiemengen an der Oberfläche des Festkörpers erfolgt ohne direkten Kontakt zwischen der eigentlichen "Pumpe" und der zu transportierenden Materie, denn das Verschieben der Materie wird allein durch den Impulsübertrag bewirkt, der z. B. durch die mechanische Deformation der Festkörperoberfläche oder auch über elektrische Kräfte, vermittelt über die Oberflächenwelle begleitende piezoelektrische Felder, erfolgt. Dazu wird an mindestens einer Stelle der Festkörperoberfläche ein entsprechender Schanwandler bzw. eine Oberflächenwellenerzeugungseinrichtung präpariert, über die eine hochfrequente akustische Oberflächenwelle entlang der Oberfläche des Festkörpers angeregt werden kann.

Der Materietransport durch Impulsübertrag von einer Oberflächenwelle erlaubt hohe Strömungs- und Prozeßgeschwindigkeiten bei vergleichsweise kleinen elektrischen Feldstärken prinzipiell bis hinauf zur Schallgeschwindigkeit für Oberflächenwellen auf dem entsprechenden Substrat. Das vorgestellte Verfahren ist überdies in weiten Bereichen skalierbar, da die Geschwindigkeit der zu bewegenden Materiemenge anders als z. B. bei elektroosmotischen Verfahren nicht von der Kanalbreite abhängt. Zum Transport sind anders als z. B. bei elektroosmotischen Transportverfahren keine hohen Feldstärken notwendig, die ggf. zu unerwünschten elektrophysikalischen oder elektrochemischen Reaktionen führen könnten. Die zu transportierenden kleinen Materiemengen befinden sich, abgesehen von einem eventuellen hochfrequenten Wechselfeld, das die Oberflächenwelle begleitet, in einem feldfreien Raum. Die insbesondere für biologische Systeme, wie Zellen, schädlichen Effekte hoher elektrischer Felder werden also vermieden. Die Funktionsweise des Pumpmechanismus ist unabhängig von der Art und der Beschaffenheit einer gegebenenfalls verwendeten Transport- oder Pufferflüssigkeit. Zudem wird mit dem erfindungsgemäßen Verfahren eine unerwünschte Joulesche Erwärmung vermieden.

Da sowohl Richtung der effektiv wirksamen Oberflächenwelle bzw. Oberflächenwellen auf der Festkörperoberfläche, wie auch deren Position und Amplitude gezielt und getrennt einstellbar sind, ist es möglich, die Transportgeschwindigkeit bezüglich Betrag und Richtung gezielt einzustellen. So ist es möglich, komplexe Transportstrecken und -pfade für kleine Materienmengen auf der Festkörperoberfläche zu definieren.

Die Oberflächenwelle wird dabei entweder kontinuierlich oder pulsförmig generiert.

Schließlich ist z. B. bei geschlossenen Flüssigkeitsvolumina nicht notwendig, das gesamte Volumen mit der Oberflächenwelle zu bestrahlen, da aufgrund der Inkompressibilität von Flüssigkeiten der Antrieb eines kleinen Teilvolumens zum Verschieben des Gesamtvolumens ausreicht.

Ein weiterer Vorteil des erfindungsgemäßen Vorteils ist die Möglichkeit, einzelne Tropfen z. B. einer Flüssigkeit oder einer Pufferlösung fortzubewegen. Aufgrund der Oberflächenspannung laufen derartige Tropfen nicht auseinander. Kleine Materiemengen können also ohne eine umgebende Flüssigkeitssäule transportiert werden.

Schließlich ermöglicht das erfindungsgemäße Verfahren bzw. die erfindungsgemäße Vorrichtung eine sehr gerichtete Wirkung des Bewegungsmechanismus. Die Oberflächenwelle läuft aufgrund der Kristalleigenschaften des Substrates zu ihrer Erzeugung an der Oberfläche nur sehr wenig oder gar nicht lateral auseinander. Auf diese Weise ist eine sehr definierte Einwirkung der Oberflächenwelle auf die kleine Materiemenge möglich, auch wenn sich die Oberflächenwellenerzeugungseinrichtung nicht in unmittelbarer Nähe der zu bewegenden kleinen Materiemenge befindet.

Mit der erfindungsgemäßen Vorrichtung ist die Gestaltung eines "Lab-on-the-chip" möglich. Dabei dient ein "Chip", wie er z. B. aus der Elektronik bekannt ist, als Festkörperoberfläche bzw. Substrat. Verschiedene erfindungsgemäße Vorrichtungen können zu verschiedenen Zwecken kombiniert werden. Schließlich können auf derselben Chipoberfläche auch eine oder mehrere Analysestationen vorgesehen sein, in denen die Materiemenge mit einer äußeren Meßgröße in Wechselwirkung gebracht wird, z. B. einer lokalen Beleuchtung, einer lokalen Erwärmung, einem lokalen Magnetfeld, einem elektrischen Feld oder z. B. einer lokalen mechanischen Belastung.

Dabei ist die erfindungsgemäße Vorrichtung einfach herzustellen und das erfindungsgemäße Verfahren leicht durchzuführen.

Vorteilhafte Ausgestaltungen der Erfindung sind Gegenstand der Unteransprüche.

Als Festkörper kommen alle Materialien in Betracht, auf denen eine akustische Oberflächenwelle generiert werden kann. Besonders geeignet sind wegen ihrer Funktionalität z. B. Halbleiteroberflächen.

Besonders einfach lassen sich akustische Oberflächenwellen elektrisch anregen, wobei der Einsatz von piezoelektrischen Festkörperoberflächen vorteilhaft ist.

Die Bewegungsrichtung der Materiemenge kann direkt durch die Impulsrichtung der Oberflächenwelle bzw. der sich vektoriell ergebenden Impulsrichtung der Summe der Impulse einzelner Oberflächenwellen ergeben. Es ist jedoch möglich, die Festkörperoberfläche mit vorbestimmten definierten Trajektorien zu versehen, entlang derer sich die Materiemenge bewegen wird. Bei derartig vorgegebenen Trajektorien ist die Bewegungsrichtung durch die Richtung der Trajektorie vorgegeben, so daß eine leichte winkelmäßige Fehlausrichtung des Impulses der OberflächenweNen und der gewünschten Richtung unschädlich ist.

Die Funktionalisierung der Festkörperoberfläche wird durch Modulation der Benetzungseigenschaften der Festkörperoberfläche erreicht. Dies kann z. B. durch Definition hydrophober und hydrophiler Bereiche an der Oberfläche des Festkörpers geschehen, z. B. durch eine gezielte Beschichtung von Teilen der Festkörperoberfläche oder durch Mikro- oder Nanostrukturierung gewisser Bereiche der Oberfläche des Festkörpers. Die Form, Lage und Breite dieser so definierten "Leiterbahnen" kann beispielsweise über lithographische Techniken gezielt eingestellt werden. Die Kombination dieser "Leiterbahnen" mit auf ähnlicher Weise funktionalisierten Bereichen des Festkörpers, die dann als Reservoirs, Mischkammern, Analysestationen oder sensibilisierten Bereichen für Sensorikanwendungen dienen, erlaubt eine große Bandbreite möglicher Anwendungen der vorliegenden Erfindung als "Lab-on-a-chip". Sämtliche Prozeßschritte beruhen auf bekannten Verfahren der Halbleitertechnologie, so daß eine gezielte Anpassung des Chip-Layouts an ein spezielles Problem oder eine Anwendung schnell und kostengünstig erfolgen kann.

Die Definition von "Leiterbahnen" für Flüssigkeiten durch Modulation der Benetzungseigenschaften einer sonst planaren Oberfläche erspart das Ätzen von Gräben. Dies vermeidet automatisch auch ein Verstopfen kleiner Kanäle und eine eventuell notwendige Reinigung der Festkörperoberfläche ist sehr einfach.

Aufgrund der planaren Oberfläche ist ein Hängenbleiben von zu bewegender Materie an Ecken oder Kanten ausgeschlossen. Außerdem können Schichten zur Modulation der Benetzungseigenschaften mit an sich bekannten Beschichtungstechniken auf einfache Weise erhalten werden.

Das verfahrensgemäße Überstreichen der relevanten Oberflächenbereiche mit einer Oberflächenwelle erzeugt zusätzlich einen inhärenten Reinigungseffekt, der eine zusätzliche Reinigung vereinfacht oder überflüssig macht.

Das Benetzungsverhalten der in Planartechnik hergestellten "Leiterbahnen" für Flüssigkeiten, das auf einer Modulation der Benetzungseigenschaften der Festkörperoberfläche beruht, hängt außer von der speziellen Funktionalisierung der Oberfläche (Beschichtung, mechanische Behandlung, Änderung der Komposition) selbst auch empfindlich von den transportieren Volumina ab. Auf diese Weise kann erreicht werden, daß bestimmte Bereiche entlang einer Leiterbahn bei Zufuhr von Überschuß-Flüssigkeit entweder benetzen oder nicht. Dadurch lassen sich z. B. selbstorganisierende Ventilfunktionen realisieren.

Dabei wird sich die zu bewegende Materiemenge je nach ihrem Adhäsionseigenschaften entweder auf den hydrophoben oder auf den hydrophilen bzw. entweder auf den lipophoben oder auf den lipophilen Bereichen aufhalten.

Bei einer anderen Ausführungsform wird die Modulation der Benetzungseigenschaften durch Silanisierung eines Teiles der Festkörperoberfläche erreicht. Zum Erzeugen einer "Leiterbahn" für eine wässrige Lösung kann z. B. der umgebende Bereich durch Silanisierung hydrophob gemacht werden.

Vorzugsweise werden die akustischen Oberflächen durch elektrische Anregung erzeugt. Eine einfache Möglichkeit dazu bieten Interdigitalwandler, sogenannte Interdigitaltransducer. Diese bestehen in der einfachsten Ausführungsform aus mindestens zwei kammartig ineinander greifenden Metallstrukturen, die in mindestens einem planartechnischen Prozeß auf eine Substratoberfläche aufgebracht werden. Wird an eine solche Interdigitalstruktur ein hochfrequentes Wechselspannungssignal angelegt, so ergibt sich nach dem inversen piezoelektrischen Effekt eine Kristalldeformation, die die räumliche Periodizität des Interdigitalwandlers und die zeitliche Periodizität der hochfrequenten Wechselspannung aufweist. Sofern das angelegte hochfrequente Wechselspannungssignal mit der Oberflächenschallgeschwindigkeit des betreffenden Substrats in Resonanz gebracht wird, so wird sich eine akustische Oberflächenwelle senkrecht zur Achse des Wandlers ausbreiten. Die entsprechende Resonanzbedingung ergibt sich zu f=v/λ, mit f: Frequenz des angelegten Wechselfeldes, v: Oberflächenwellenschallgeschwindigkeit, λ: räumliche Periodizität des Interdigitalwandlers.

Werden die akustischen Oberflächen mittels des piezoelektrischen Effektes erzeugt, so kann der Impulsübertrag zwischen der mindestens einen akustischen Oberflächenwelle und der mindestens einen Materiemenge durch die im piezoelektrischen Substrat die Welle begleitenden elektrischen Felder durch Vermittlung elektrischer Kräfte auf geladene oder polarisierbare Materie vermittelt werden. Bei einer anderen Ausgestaltung des Verfahrens wird die begleitende mechanische Deformation der Festkörperoberfläche zum Impulsübertrag auf die Materiemenge eingesetzt.

Der piezoelektrische Effekt kann in dem Substrat selbst erzeugt werden, wenn ein piezoelektrisches Substrat zum Einsatz kommt. Andererseits kann der piezoelektrische Effekt in einer piezoelektrischen Schicht auf der Substratoberfläche benutzt werden. Die piezoelektrische Schicht kann derart gewählt werden, daß sie andere Benetzungseigenschaften aufweist als die restliche Substratoberfläche. Auf diese Weise kann mit der Schicht zur Erzeugung des piezoelektrischen Effektes gleichzeitg auch eine Modulation der Benetzungseigenschaften zur Ausbildung von "Leiterbahnen" eingesetzt werden.

Bevorzugte Ausführungsformen umfassen ungewichtete Wandler, gewichtete Wandler, unidirektional abstrahlende Wandler, fokussierende Wandler oder Wandler für Multifrequenzbetrieb. Materietransport erfolgt dann entlang der Ausbreitungsrichtung der Oberflächenwelle. Durch Superposition mehrerer Oberflächenwellen kann ein resultierender Gesamtimpuls eingestellt werden, wodurch die Ausbreitungsrichtung der Materiemenge nicht notwendigerweise parallel zur Ausbreitungsrichtung der erzeugten Oberflächenwellen erfolgen muß. Daneben kann für jede Welle die Frequenz, die Amplitude und auch die Phasenlage bezüglich einer anderen Welle gezielt eingestellt werden, um somit komplexe Interferenz und Übertagerungsmuster zu erzeugen. Somit sind sowohl Betrag als auch die Richtung des Geschwindigkeitsvektors für den Materietransport gezielt und in weiten Grenzen frei einstellbar.

Interdigitalwandler lassen sich zudem sehr einfach mit bekannten planartechnologischen Methoden auf Festkörperoberflächen erzeugen. Sie stellen eine wohldefinierte rein elektrische Schnittstelle zwischen der Vorrichtung und einer eventuellen externen Ansteuerungs- und Kontrollelektronik dar. Ebenso ist es denkbar, die notwendigen Oberflächenwellen bzw. Pulssequenzen über die drahtlose Einstrahlung einer hochfrequenten Wechselspannung anzusteuern. Dazu kann z. B. eine Antenneneinrichtung vorgesehen sein.

Als Interdigitalwandler können Wandler mit konstantem Fingerabstand eingesetzt werden. Dann wird über die gesamte Breite des Interdigitalwandlers eine gleichförmige Oberflächenwelle über die Oberfläche geschickt, wenn die entsprechende Frequenz angelegt wird.

Sind mehrere Interdigitalwandler auf der Oberfläche vorgesehen, die die Materiemenge in verschiedenen Richtungen bewegen bzw. manipulieren können, kann durch geeignete Auswahl des jeweiligen Fingerabstandes erreicht werden, daß die verschiedenen Interdigitalwandler bei verschiedenen Frequenzen in Resonanz kommen. So läßt sich durch Auswahl der Frequenz der jeweilige Interdigitalwandler auswählen und so die Materiemenge in der gewünschten Weise manipuliert werden.

Bei einer vorteilhaften Ausführungsform ist vorgesehen, daß zur Erzeugung von Oberflächenwellen verschiedener Frequenz zumindest ein Interdigitalwandler mit nicht konstantem Fingerabstand eingesetzt wird. In diesem Fall wird die Oberflächenwelle nur an dem Ort generiert, an dem die Resonanzbedingung erfüllt ist. Verschiedene Frequenzen führen also zu einer Anregung von Oberflächenwellen an verschiedener Stelle des Interdigitalwandlers. Der nicht konstante Abstand der ineinandergreifenden Finger des Interdigitalwandlers kann sich z. B. sprungartig ändern. Besonders einfach ist jedoch ein sogenannter "getaperter" interdigitaler Transducer. Hier ändert sich der Fingerabstand des Interdigitalwandlers kontinuierlich, z. B. linear. Mit Erhöhung der Frequenz läßt sich so der Anregungsort entlang des Interdigitalwandlers kontinuierlich verschieben. So läßt sich sehr genau der Bereich einstellen, in dem sich die Oberflächenwelle ausbreitet und ein sehr lokaler Impulsübertrag auf eine kleine Materiemenge ist möglich. Ebenso lassen sich verschiedene Materiemengen selektiv durch Auswahl der Frequenz ansteuern, wenn sie sich z. B. entlang der Achse des Interdigitaltransducers verteilt aufhalten.

Durch Wahl komplexer Kombinationen oder Abfolgen der Betriebsfrequenz ist ein Multiplexen bzw. ein Schalten von Materieströmen möglich. Mit nur einer Hochfrequenzquelle, die dem Transducer mit nicht konstantem Fingerabstand ansteuert, ist eine Vielzahl von möglichen Pfaden programmierbar und einstellbar, entlang derer akustische Oberflächenwellen kleinste Materiemengen bewegen.

Es ist also ein gezieltes Ansteuern kleinster Materiemengen entlang vorbestimmter Pfade unter Verwendung einer einzigen Einrichtung ohne bewegliche Teile möglich. Über die Betriebsfrequenz als auch die Amplitude der an den Transducer angelegten hochfrequenten Wechselspannung ist die Vorrichtung voll einstellbar. Mit mehreren Interdigitaltransducern der genannten Art ist die Generation komplexer Wellenfelder zur Manipulation kleinster Materiemengen entlang der Oberfläche des betreffenden Substrats möglich.

Auch hier ist es möglich, durch drahtlose Einstrahlung eines Hochfrequenzfeldes definierter Frequenz die Generierung der Oberflächenwellen anzuregen. Durch Auswahl der Frequenz läßt sich der Ort der Oberflächenwellengeneration sehr genau bestimmen.

Das erfindungsgemäße Verfahren zur Manipulation bzw. zum Bewegen einer Materiemenge läßt sich durch Einstrahlung einer akustischen Oberflächenwelle einsetzen, um eine Materiemenge in zwei Teile zu unterteilen. Eine akustische Oberflächenwelle wird dabei z. B. auf eine ruhende Materiemenge geschickt. Bei entsprechender Parameterwahl bewegen sich Teile der Materiemenge dann auseinander. Ebenso kann vorgesehen sein, daß eine sich bewegende Materiemenge, die z. B. mit Hilfe einer erfindungsgemäßen Vorrichtung bewegt wird, von der Seite mit einer Oberflächenwelle beschickt wird und so in zwei Untermengen aufgeteilt wird.

Eine andere erfindungsgemäße Ausgestaltung des Verfahrens ermöglicht eine Durchmischung, indem Oberflächenwellen aus verschiedenen Richtungen auf die mindestens eine Materienmenge geschickt werden. Dadurch gerät die Materiemenge in sich in Bewegung, ggf. ohne ihre Gesamtlage zu verändern.

Zur Mischung zweier Flüssigkeitstropfen können diese bei einer Ausgestaltung des erfindungsgemäßen Verfahrens bzw. mit einer Ausführungsform der erfindungsgemäßen Vorrichtung direkt aufeinander zubewegt werden. Zwei Oberflächenwellenerzeugungseinrichtungen, deren Abstrahlcharakteristik zumindest Teile umfaßt, die unter einem Winkel von 180 Grad gegeneinander laufen, erzeugen Oberflächenwellen, die sich in ihrer Wirkung unter normalen Umständen aufheben würden. Trifft jedoch die Oberflächenwelle einer dieser Erzeugungseinrichtungen zunächst auf eine kleine Materiemenge, z. B. einen Flüssigkeitstropfen, so überträgt sie zum einen Impuls auf diese Materiemengen und wird zum anderen gedämpft. Trifft sie im Anschluß auf eine weitere kleine Materiemenge, so ist sie in ihrer Wirkung also bereits geschwächt. In analoger Weise überträgt die Oberflächenwelle, die mit der anderen Oberflächenwellenerzeugungseinrichtung erzeugt worden ist, auf die andere kleine Materiemenge einen Impuls und wird gedämpft. Die Wirkung der Ober flächenwellen der sich gegenüberstehenden Oberflächenwellenerzeugungseinrichtungen ist also jeweils stärker am Ort derjenigen kleinen Materiemenge, die näher an der jeweiligen Oberflächenwellenerzeugungseinrichtung ist. Insofern lassen sich zwei kleine Materiemengen, z. B. Flüssigkeitstropfen, direkt ineinander treiben, um gemischt zu werden oder zum Zwecke einer Reaktion.

Bei einer anderen erfindungsgemäßen Ausgestaltung des Verfahrens wird eine Oberflächenwelle in etwa tangential auf die mindestens eine kleine Materiemenge geschickt, so daß diese in Rotation versetzt wird.

Eine erfindungsgemäße Vorrichtung kann dazu z. B. eine definierte Trajektorie mit einem im wesentlichen runden Bereich umfassen, wobei die mindestens eine Erzeugungseinrichtung für Oberflächenwellen derart angeordnet ist, daß eine Oberflächenwelle in tangentialer Richtung dieses runden Bereiches erzeugt werden kann. So läßt sich eine Zentrifuge erzeugen.

Bei einer Weiterbildung des Verfahrens wird die Materiemenge innerhalb mindestens eines Bereiches der Festkörperoberfläche bezüglich mindestens einer physikalischen, chemischen oder biologischen Eigenschaft analysiert. Dies kann während der Beschallung mit der Oberflächenwelle zur Erzeugung einer Bewegung passieren, oder aber das erfindungsgemäße Verfahren kann dazu eingesetzt werden, die Materiemenge zu einer Analysestation zu transportieren.

Ein so ausgestaltetes Verfahren bietet den Vorteil, daß sowohl die Bewegung als auch die Analyse der Materiemenge auf einem "Chip" möglich ist.

Zum Beispiel kann die mindestens eine Materiemenge entweder vor oder nach der Analyse von der restlichen Materiemenge separiert werden, z. B. durch Einstrahlen einer Oberflächenwelle.

Es kann auch mit einer einzelnen Oberflächenwelle eine Separierung erreicht werden. Wird eine Oberflächenwelle auf eine kleine Materiemenge, z. B. eine Flüssigkeitsmenge geschickt, so wird, aufgrund der Oberflächenspannung und der Inkornpressibilität der Flüssigkeit, durch den Impulsübertrag auf einen Teil der Menge die gesamte Materiemenge in Bewegung gesetzt. Wird jedoch eine Oberflächenwelle einer Stärke gewählt, deren Impulsübertrag die Oberflächenspannung überwinden kann, so wird ein Teil der Materiemenge abgetrennt und von dem Impulsübertrag der Oberflächenwelle fortbewegt.

Schließlich läßt sich auf einer erfindungsgemäßen Vorrichtung eine Schonschicht aufbringen, deren Dicke kleiner ist als die typische Eindringtiefe einer Oberflächenwelle. Eine solche Schonschicht ist wichtig, wenn Materialien manipuliert werden sollen, die auf dem verwendeten piezoelektrischen Substrat bzw. dem piezoelektrischen Bereich des Substrates beschädigt werden würden. So werden z. B. Biomoleküle auf einem piezoelektrischen Substrat aus Galiumarsenid zerstört. Ist die Schicht dünner als die typische Eindringtiefe einer Oberflächenwelle, also in etwa der Wellenlänge, so leidet die Funktionalität der piezoelektrischen Oberfläche durch Aufbringen der Schonschicht nicht oder nur wenig. Alternativ kann ein Substrat aus einem Material mit einer gewünschten Oberflächenchemie benutzt werden, auch wenn dieses Material nicht piezoelektrisch ist. Dann wird die Oberfläche in den gewünschten Bereichen mit einem piezoelektrischen Material beschichtet werden, z. B. Zinkoxid. Dabei kann es ausreichend sein, wenn z. B. bei Verwendung elektrischer Anregungsmechanismen das piezoelektrische Beschichtungsmaterial nur in jenem Bereich der Oberfläche aufgebracht wird, in dem sich die Oberflächenwellenerzeugungseinrichtung befindet. Dort wird dann durch den piezoelektrischen Effekt die Oberflächenwelle erzeugt, die sich auch in dem nicht piezoelektrischen Substrat fortbewegen kann.

Schließlich kann eine piezoelektrische Beschichtung in ausgewählten Bereichen der Oberfläche auch zur Modulation der Benetzungseigenschaften eingesetzt werden.

Eine Schonschicht kann z. B. aus Quarz gebildet sein. Eine solche Quarzschicht ist z. B. für Biomoleküle unschädlich.

Die Analyse kann z. B. ebenfalls mit Hilfe von Oberflächenwellen bezüglich der Größe, der Masse, der optischen, magnetischen, elektrischen und/oder dielektrischen Eigenschaften durchgeführt werden. Dazu kann die Materiemenge mit einer Oberflächenwelle bestrahlt werden und die Wirkung der Materiemenge auf die Oberflächenwelle untersucht werden.

Ebenso ist es möglich, daß die Materiemenge in mindestens einem Bereich der Festkörperoberfläche, in den sie z. B. mit Hilfe von Oberflächenwellen eingebracht worden ist, durch chemische, physikalische oder biologische Prozesse modifiziert wird. Dies kann z. B. durch entsprechende Funktionalisierung eines Bereiches der Festkörperoberfläche bezüglich der physikalischen, chemischen oder biologischen Eigenschaften erreicht werden.

Besonders vorteilhaft ist, wenn zu Analysezwecken bzw. Modifizierungszwecken die Materiemenge auf mindestens einen Bereich der Festkörperfläche durch Modulation oder Beschichtung dieses Bereiches der Festkörperoberfläche über Chemisorption oder Physisorption reversibel und vorübergehend immobilisiert wird. Erreicht wird dies z. B. durch eine entsprechende Funktionalisierung der Festkörperoberfläche, wenn diese z. B. rauher als die Umgebung ist oder andere Benetzungseigenschaften aufweist.

Das erfindungsgemäße Verfahren läßt sich auch einsetzen, um mindestens zwei Materiemengen in mindestens einen Bereich der Festkörperoberfläche durch gezielte oder gerichtete Bewegung zum Zweck mindestens einer physikalischen, chemischen oder biologischen Reaktion in Kontakt zu bringen. Diese besondere Ausgestaltung des erfindungsgemäßen Verfahrens ermöglicht die Reaktion von sehr kleinen Materiemengen. Die akustischen Oberflächenwellen werden dazu eingesetzt, die einzelnen Materiemengen gegeneinander zu transportieren, in Berührung zu bringen und ggf. zu mischen. Gegebenenfalls können die Oberflächenwellen dann zur Verstärkung oder Auslösung der Reaktion zwischen den zwei Materiemengen eingesetzt werden.

Bei einer Ausführungsform der erfindungsgemäßen Vorrichtung kann ein externes Vorratsreservoir oder ein externes Auffangreservoir mit Hilfe einer definierten Trajektorie an die Vorrichtung angeschlossen sein, um die Materiemenge in die Vorrichtung bzw. aus der Vorrichtung heraus zu transportieren.

Ein Vorratsreservoir oder ein Auffangreservoir kann auch auf der Festkörperoberfläche selbst vorgesehen sein, um die Materiemenge zu liefern bzw. aufzunehmen.

Ein solches Reservoir kann durch entsprechende Funktionalisierung der Oberfläche gebildet sein wobei ein Bereich der Festkörperoberftäche in seinen Benetzungseigenschaften so verändert wird, daß sich die Materiemenge bevorzugt darin aufhält. Eine entsprechende Modulation der Benetzungseigenschaften kann analog erzeugt werden, wie es für die erfindungsgemäße Ausführung mit definierten Trajektorien durch Modulation der Benetzungseigenschaften erreicht wird.

Bei einer Ausführungsform der erfindungsgemäßen Vorrichtung ist ein Bereich der Festkörperoberfläche mit einer Einrichtung zur lokalen Erwärmung versehen. Eine solche Vorrichtung ermöglicht es, daß eine Materiemenge mit Hilfe von akustischen Oberflächen in einen oder über einen erwärmten Bereich bewegt wird, um dort z. B. eine Reaktion zu befördern.

Die erfindungsgemäße Vorrichtung bzw. das erfindungsgemäße Verfahren lassen sich überall dort einsetzen, wo auf einer Festkörperoberfläche kleine Materiemengen bewegt bzw. manipuliert werden sollen. Dies ist bei Flüssigkeiten, Gasen, festen Körpern oder Kombinationen, Mischungen und/oder Dispersionen denkbar. Das erfindungsgemäße Verfahren bzw. die erfindungsgemäße Vorrichtung lassen sich vorteilhaft zur Analyse, Synthese, Trennung, Durchmischung, Portionierung oder Zentrifugierung einer kleinen Materiemenge einsetzen.

Verschiedene Ausführungsformen der erfindungsgemäßen Vorrichtung bzw. des erfindungsgemäßen Verfahrens werden mit Bezug zu den anliegenden Figuren näher erläutert.

Dabei zeigt
- Fig. 1: eine Draufsicht auf eine erste Ausführungsform einer erfindungsgemäßen Vorrichtung in schematischer Darstellung,
- Fig. 2: eine Draufsicht auf eine zweite Ausführungsform einer erfindungsgemäßen Vorrichtung in schematischer Darstellung,
- Fig. 3: eine Draufsicht auf eine dritte Ausführungsform einer erfindungsgemäßen Vorrichtung in schematischer Darstellung,
- Fig. 4: eine Draufsicht auf eine vierte Ausführungsform einer erfindungsgemäßen Vorrichtung in schematischer Darstellung,
- Fig. 5: eine Draufsicht auf eine fünfte Ausführungsform einer erfindungsgemäßen Vorrichtung in schematischer Darstellung,
- Fig. 6: eine Draufsicht auf ein Detail der Ausführungsform der Fig. 5 in schematischer Darstellung und
- Fig. 7: eine Draufsicht auf eine sechste Ausführungsform einer erfindungsgemäßen Vorrichtung in schematischer Darstellung.

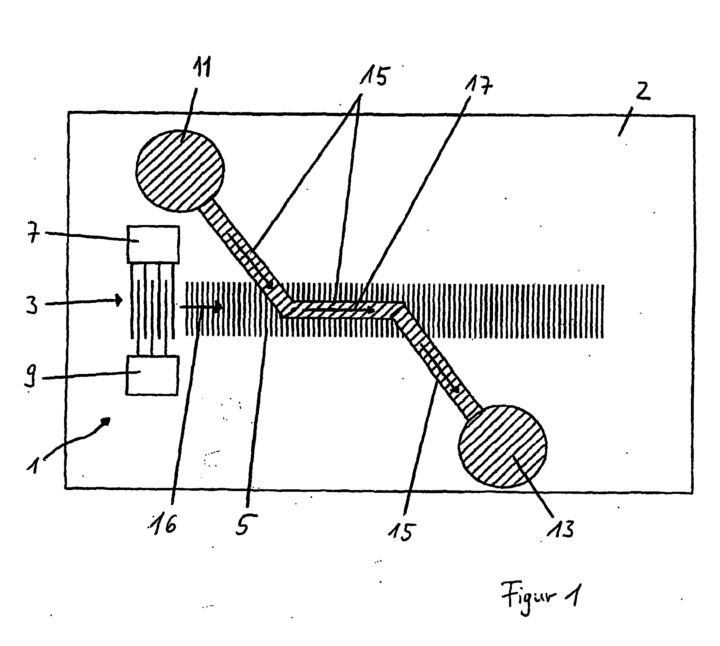

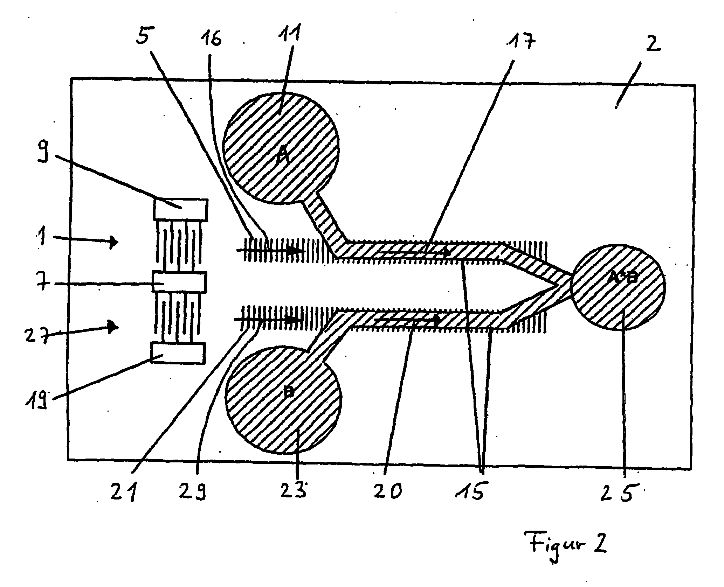

In Fig. 1 bezeichnet 1 einen Interdigitaltransducer. Die Anzahl der ineinander greifenden metallischen Fingerelektroden 3 ist bei realen Ausftihrungsförmen sehr viel höher und der Abstand sehr viel kleiner, entsprechend in etwa der Wellenlänge der zu erzeugenden Oberflächenwelle. 7 und 9 bezeichnen Elektroden zum Anschluß einer Hochfrequenzwechselspannung. Der Interdigitaltransducer ist z. B. mit Hilfe lithographischer Techniken in bekannter Weise auf der Oberfläche des Chips 2 aufgebracht worden. Chip 2 ist ein piezoelektrisches Substrat. Aus der Oberflächenschallgeschwindigkeit des piezoelektrischen Substrats 2 und dem Fingerabstand λ des Interdigitaltransducers 1 läßt sich die Resonanzfrequenz des Transducers zu f=v/λ errechnen. Bei Anlegen eines Wechselfeldes mit dieser Frequenz wird eine Oberflächenwelle erzeugt, die sich in der Richtung senkrecht zu den Fingern 3 des Interdigitaltransducers 1 ausbreitet. Ein von der Oberflächenwelle überstrichene Bereich ist mit 5 bezeichnet. In der schematischen Darstellung der Fig. 1 ist der von der Oberflächenwelle überstrichene Bereich 5 der Übersichtlichkeit halber nicht bis zum erzeugenden Transducer 1 eingezeichnet, sondern nur in dem interessierenden Bereich, in dem er die Leiterbahnen 15 mit einer Oberfächenwellen überstreicht. Dies gilt entsprechend auch für die folgenden Figuren 2 bis 4.

Typische Materialien, die als Festkörper eingesetzt werden können, umfassen z. B. Litiumniobat oder Quarz. Als piezoelektrisches Beschichtungsmaterial kann Zinkoxid eingesetzt werden. Typische Frequenzen sind einige 100 MHz, wodurch sich typische Fingeräbstände der interdigitalen Transducer von einigen Mikrometern ergeben.

15 bezeichnet eine "Leiterbahn" für die Materiemenge. Diese Leiterbahr kann z. B. lithographisch definiert sein und andere Benetzungseigenschaften als die umgebende Festkörperoberfläche haben. Zum Beispiel kann diese Leiterbahn gegenüber dem der restlichen Oberfläche hydrophiles Beschichtungsmaterial umfassen. Je nach zu manipulierender Materiemenge wird eine lipophobe, lipophile, hydrophobe oder hydrophile Beschichtung der "Leiterbahn" bzw. der Umgebung gewählt.

11 bezeichnet einen ebenfalls modifizierten Oberflächenbereich, der als Vorratsreservoir dient. 13 bezeichnet ein entsprechendes Auffangreservoir, das ebenfalls entsprechend modifizierte Oberflächeneigenschaften hat. Die Oberflächenbenetzungseigenschaften sind dabei so verändert, daß sich die Materiemenge bevorzugt auf den Bereichen 11, 15 und 13 aufhält.

17 bezeichnet die Bewegung der Materiemenge, die mit Hilfe der eingestrahlten Oberflächenwelle erreicht werden kann, die vom Transducer 1 in Richtung 16 abgestrahlt wird.

Die Funktionsweise ist wie folgt.

In den Bereich 11 des Chips 2 wird eine Materiemenge, z. B. eine Flüssigkeit eingebracht. Ein Teil der Flüssigkeit wird sich bis in den Bereich des Oberflächenwellenpfades 5 ausbreiten. In dem Moment, wo eine weitere Bewegung der Flüssigkeit gewünscht ist, wird ein Hochfrequenzsignal an die Elektroden 7, 9 des Interdigitaltransducers 1 angelegt. Die Oberflächenwelle breitet sich senkrecht zu den Fingern 3 des Interdigitaltransducers aus. Diese gibt ihren Impuls an die Materie im Bereich 15 weiter und führt zu einer Bewegung in der Richtung 17. Da sich das Material bevorzugt auf den Bereichen mit entsprechend modifizierten Oberflächenbenetzungseigenschaften 11, 15, 13 aufhält, bewegt sich die Materiemenge in Richtung des Auffangreservoirs 13. Auf diese Weise kann die Materie aus dem Vorratsreservoir 11 in das Vorratsreservoir 13 "gepumpt" werden. Dort kann z. B. eine Analyse stattfinden. Möglich ist z. B. eine lokale optische Detektion, ein Anlegen eines lokalen Magnetfeldes oder eines lokalen elektrischen Feldes, eine mechanische Belastung oder eine lokale Erwärmung. Ebenso kann der Bereich 13 eine chemisch oder physikalisch modifizierte Oberfläche aufweisen, so daß die dort hin bewegte Materiemenge eine Reaktion erfährt.

Bei dem oben geschilderten Verfahrensablauf wird eine Oberflächenwelle einer Stärke gewählt, die einen Impulsübertrag auf die Materiemenge bewirkt, der die Oberflächenspannung nicht überwinden kann. Auf diese Weise wird das Material vollständig auf dem Reservoir 11 in das Reservoir 13 geführt.

Wird eine Oberflächenwelle größerer Stärke gewählt, wird ein kleiner Materieteil abgetrennt werden. Die stärkere Oberflächenwelle trifft im Bereich 5 auf die Materiemenge. Die Materiemenge, die vom Impuls der stärkeren Oberflächenwelle getroffen wird, trennt sich von dem restlichen Materievolumen ab, da die Oberflächenspannung durch den größeren Impulsübertrag überwunden wird. Auf diese Weise kann eine kleine tröpfchenförmige Menge der Materie abgetrennt und in das Reservoir 13 transportiert werden. Die notwendige Stärke der Oberflächenwelle für diese Anwendung kann in einfachen Vorabexperimenten bestimmt werden.

Typischerweise lassen sich mit dem erfindungsgemäßen Verfahren Materiemengen in der Größenordnung von Pikolitern bzw. Millilitern bei durch Modifikation der Oberflächenspannung erzeugten "Leiterbahnen" mit einer Breite in der Größenordnung von 10 Mikrometern bewegen.

Bei einer nicht in Figuren gezeigten Ausführungsform befindet sich z. B. in dem Bereich 13 der Fig. 1 eine Beschichtung zur lokalen Erwärmung des darauf befindlichen Materials, z. B. um eine Reaktion zu beschleunigen bzw. zu befördern. Eine solche Beschichtung kann z. B. eine hochohmige Metallschicht sein, die mit Hilfe von elektrischem Strom geheizt wird.

Fig. 2 zeigt die Ausführung einer erfindungsgemäßen Vorrichtung als Mischkammer. Gleiche Bezugsziffem bezeichnen gleiche Elemente.

Es ist ein zweites Vorratsreservoir 23 vorgesehen, das über eine weitere Leiterbahn mit einem Mischbereich 25 verbunden ist. Wiederum sind die Vorratsbereiche 11, 23, die Leiterbahnen 15 und der Mischbereich 25 z. B. durch entsprechende Modulation der Benetzungseigenschaften der Oberfläche des Chips 2 ausgebildet. Weiterhin befindet sich neben dem ersten Interdigitaltransducer 1 ein zweiter Interdigitaltransducer 27. Die Transducer haben die gemeinsame Elektrode 7 und 19 bezeichnet die zweite Elektrode des zweiten Transducers 27. Der Transducer 27 erzeugt bei Anlegen einer entsprechenden Frequenz, die sich nach der oben angegebenen Formel berechnet, eine Oberflächenwelle in den Bereich 21 in Richtung 29, während der erste Transducer in dem Bereich 5 eine Oberflächenwelle in Richtung 16 erzeugt. Während sich in dem Vorratsbereich 11 eine Flüssigkeitsmenge A befindet, befindet sich in dem Vorratsbereich 23 eine Flüssigkeitsmenge B, von denen sich jeweils ein Teil in die Leiterbahnen 15 ausgebreitet hat. Bei Einstrahlen der Oberflächenwellen aus den Transducem 1 bzw. 27 wird ein Impuls auf die Materiemenge A bzw. B in Richtung 17 bzw. 20 erzeugt. Auf den vorbehandelten Leiterbahnen 15 bewegen sich die einzelnen Materiemengen in Richtung des Mischbereichs 25, in dem sie sich zu der Mischung A + B vermengen.

Haben die Interdigitaltransducer 1 und 27 einen unterschiedlichen Fingerabstand, so kann mit Auswahl der Frequenz erreicht werden, daß nur einer der Transducer jeweils eine Oberflächenwelle erzeugt. So können die Materiemengen aus den Vorratsbereichen 11 bzw. 23 gleichzeitig, nacheinander oder abwechselnd bewegt werden. Da die Amplitude der Oberflächenwellen einzeln einstellbar ist und auch Pulsbetrieb möglich ist, können wohldefinierte kleinste Flüssigkeitsmengen miteinander in Reaktion gebracht oder durch den Ultraschall der Oberflächenwellen durchmischt werden. So werden parallele unabhängige Analysen bzw. Synthesen auf einem Chip mit nur einer Ansteuerungseinrichtung möglich. Die Oberflächenwellen der Interdigitaltransducer 1 und 27 befördern zusätzlich noch die Vermischung der einzelnen Materiemengen A und B in dem Mischbereich 25.

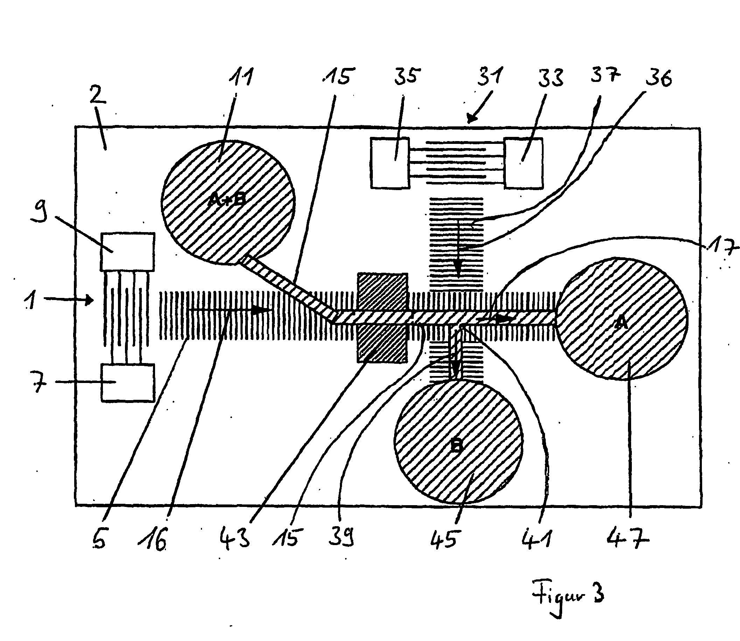

Fig. 3 zeigt eine Ausführungsform, die zur Sortierung von Schwebteilchen in einer Flüssigkeit (beispielsweise biologische Zellen) bezüglich einer bestimmten Eigenschaft dienen kann.

Wiederum ist ein Oberftächenwellenpfad 5 mit einem Interdigitaltransducer 1 zu bestrahlen. Ein weiterer Bereich 37 kann mit einem zweiten Transducer 31 mit den Elektroden 33 und 35 mit einer Oberflächenwelle beschickt werden. Zur selektiven Ansteuerung der zwei Interdigitaltransducer 1, 31 sind diese mit unterschiedlichen Fingerabständen versehen, so daß bei Einstrahlung einer bestimmten Frequenz nur einer der Interdigitaltransducer eine Oberflächenwelle generiert. Während der Interdigitaltransducer 1 eine Oberflächenwelle in Richtung 16 erzeugt, erzeugt der Interdigitaltransducer 31 eine Oberflächenwelle in Richtung 36, im wesentlichen senkrecht zu der ersten Oberflächenwelle. Ein Vorratsreservoir 11 ist Ober die gezeigten Leiterbahnen 15, die wiederum durch Modulation der Benetzungseigenschaften der Oberfläche des Chips 2 erhalten werden, mit den Auffangreservoirs 45 bzw. 47 verbunden, die durch die Leiterbahnen mit dem Kreuzungsbereich 41 verbunden sind, der von beiden Interdigitaltransducem 1, 31 mit einer Oberflächenwelle beschickt werden kann. 43 bezeichnet einen Analysebereich.

Das Reservoir 11 enthält beispielsweise eine Pufferflüssigkeit, in der sich z. B. zwei Sorten biologischer Zellen A und B befinden. Ein Interdigitaltransducer 1 erzeugt bei Anlegen einer geeigneten hochfrequenten Spannung eine akustische Oberflächenwelle in Richtung 16, die wie bei den Ausführungsformen der Figuren 1 oder 2 per Impulsübertrag die Flüssigkeit samt den darin befindlichen Zellen aus dem Reservoir 11 in Richtung des Analysebereichs 43 transportiert. Wiederum geschieht dies, indem die Oberflächenwelle in Richtung 16 auf Materiematerial trifft, das bereits aus dem Vorratsgefäß 11 in die Leiterbahn 15 eingetreten ist. Aufgrund der Oberflächenspannung der Flüssigkeit wird die Flüssigkeit aus dem Reservoir 11 hinausgezogen, wenn eine Oberflächenwelle auf die Leiterbahn 15 trifft, in der sich bereits Materie befindet. Im Analysebereich 43 werden beispielsweise die Zellen der Sorte B eindeutig identifiziert. Dies geschieht beispielsweise über die an sich bekannte Fluoreszenzmarkeranalyse, bei der der Zelltyp B mit einem Fluoreszenzmarker markiert worden ist und durch Beleuchtung im Gebiet 43 zur Fluoreszenz angeregt wird. Ein optischer Detektor empfängt dieses Fluoreszenzlicht aus dem Bereich 43. Das Signal des optischen Detektors, der in Fig. 3 nicht gezeigt ist, wird benutzt, um eine Wechselspannungsquelle anzusprechen, die mit dem Interdigitaltransducer 31 verbunden ist. Diese Wechselspannung liegt dann an dem Interdigitaltransducer 31 an, der daraufhin einen Oberflächenwellenimpuls in Richtung 36 erzeugt. Dieser Oberflächenwellenimpuls trifft im Kreuzungsbereich 41 auf die Materie, die sich entlang der Leiterbahn 15 bewegt. Gemäß der Analyse in dem Analysebereich 43 befindet sich gerade Zellmaterial des Typs B auf der Leiterbahn. Durch den Oberflächenwellenimpuls des Interdigitaltransducers 31 werden diese Zellen in Richtung des Reservoirs 45 getrieben und erreichen nicht das Reservoir 47. Wird in dem Analysebereich 43 festgestellt, daß nur Zellen A auf der Leiterbahn 15 sind - das heißt, bei Beleuchtung wird kein Fluoreszenzsignal gemessen -, so wird kein Oberflächenwellenimpuls in Richtung 36 erzeugt und die Materie wird in Richtung des Reservoirs 47 bewegt. So läßt sich eine Trennung der Zellen A und B erreichen.

Selbstverständlich sind auch andere Trennungskriterien einsetzbar.

Die Ausführungsform der Fig. 3 stellt somit ein extern ansteuerbares Ventil zur Umleitung des Transports bzw. zur Unterbrechung des Transports in den Bereich 47 dar.

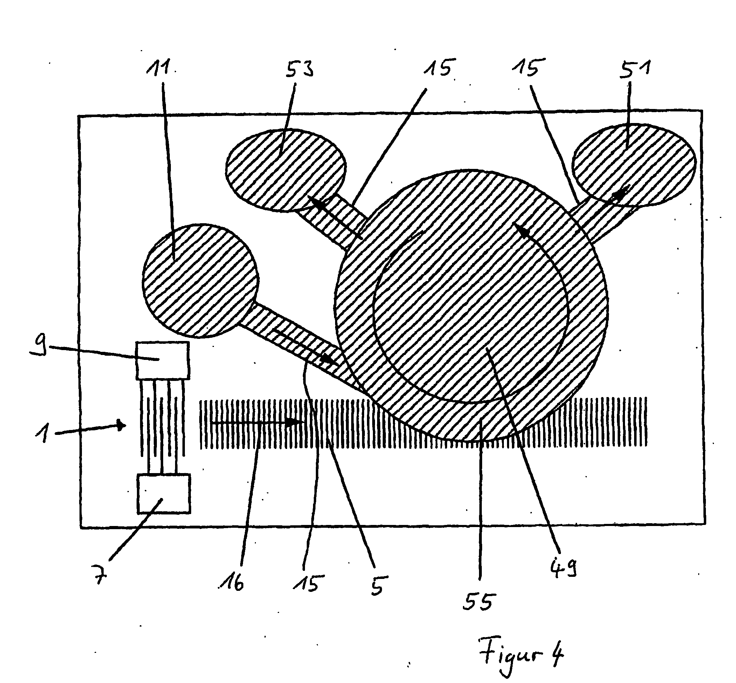

Fig. 4 zeigt eine Ausführungsform, die als Zentrifuge einsetzbar ist.

Ein runder Bereich 49 ist z. B. wiederum durch Modulation der Benetzungseigenschaften so ausgestaltet, daß sich im Gegensatz zur unbehandelten Festkörperoberfläche dort die zu manipulierende Materiemenge bevorzugt aufhält. Der runde Bereich 49 ist so angeordnet, daß sich eine Oberflächenwelle, die mit dem Interdigitaltransducer 1 erzeugt wird, im Randbereich 55 des runden Bereichs 49 ausbreitet. Die Ausbreitungsrichtung 16 der Oberflächenwelle ist also tangential zu dem runden Bereich 49. An den Umfang des runden Bereichs 49 sind weitere Bereiche 11, 53, 51 durch entsprechende Leiterbahnen, die durch Modulation der Benetzungseigenschaften der Festkörperoberfläche erzeugt werden, angeschlossen. Dabei dient der Bereich 11 als Vorratsreservoir und die Bereiche 51 und 53 als Auffangreservoirs.

Wird eine Materiemenge in den Bereich 11 eingebracht, so wird sich ein Teil in den Bereich 49 ausbreiten. Wird dann mit Hilfe des Interdigitaltransducers 1 in Ausbreitungsrichtung 16 in dem Ausbreitungsbereich 5 eine Oberflächenwelle erzeugt, so trifft diese im Überdeckungsbereich 55 auf die Materie. Diese wird dann entlang des Umfangs des runden Bereichs 49 in Bewegung und somit in Rotation versetzt. Handelt es sich bei der Materie z. B. um eine Flüssigkeit mit Schwebteilchen, so werden die schwereren Schwebteilchen nach Art einer Zentrifuge durch die Fliehkräfte nach außen getrieben und von den Reservoirs 51, 53 je nach Gewicht aufgefangen.

Bei einer in den Figuren nicht dargestellten Ausführungsform ist durch geeignete Mikro- oder Nanostrukturierung ein Netzwerk aus Leiterbahnen in Form von Mikro-oder Nanokanälen hergestellt worden. Ein solches Netzwerk kann die Funktion eines künstlichen Gels oder Siebes für (elektro-)phoretische Prozesse übemehmen, wenn es z. B. in einem Bereich 5 des von der Oberflächenwelle überstrichenen Chips 2 aufgebracht ist, in dem die Oberflächenwelle eine Leiterbahn 15 überstreicht, in dem sich die Materie befindet. So kann eine Größentrennung der Bestandteile in Art eines Siebes oder künstlichen Gels erfolgen.

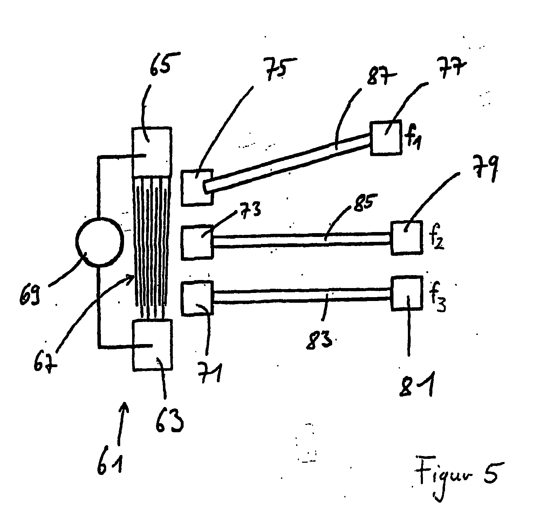

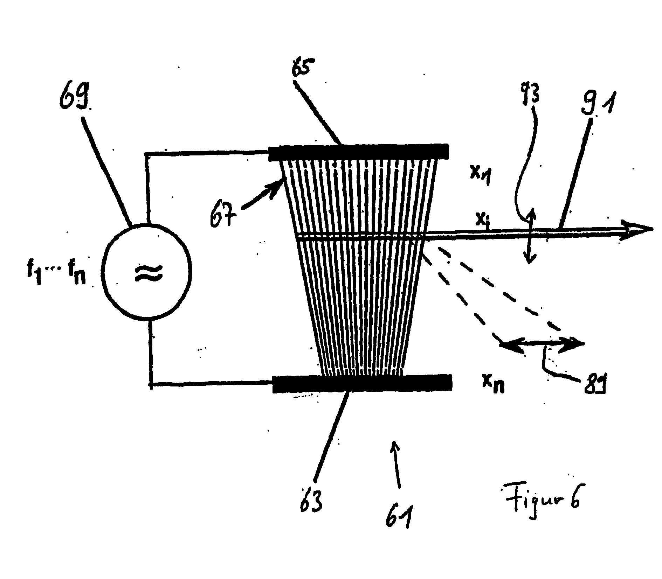

Fig. 5 zeigt eine Ausführungsform mit einem sogenannten "getaperten" Interdigitaltransducer 61. Der getaperte Interdigitaltransducer weist ineinandergreifende Finger 67 auf, deren Abstand sich im gezeigten Beispiel linear von einer Elektrode 65 zur anderen Elektrode 63 verringert. Die Funktionsweise dieses getaperten Interdigitaltransducers wird mit Bezug zu Fig. 6 erläutert.

Die beiden kammartig ineinandergreifenden Fingerelektrodenstrukturen 67, die mit den Elektroden 65 und 63 verbunden sind, sind beispielhaft derart dargestellt, daß ihr gegenseitiger räumlicher Abstand 89 entlang der Achse des Interdigitaltransducers sich von λ₀ an der Position x₀ über λᵢ an der Position xᵢ bis zu λₙ an der Position xₙ ändert. Da die Wellenlänge einer Oberflächenwelle dem Abstand 89 der einzelnen Finger entspricht, ist durch den sich ändernden Abstand 89 die Wellenlänge λᵢ vorbestimmt, mit der eine Oberflächenwelle an dem Ort xᵢ erzeugt werden kann. Der Zusammenhang zwischen Wellenlänge und anliegender Frequenz ergibt sich zu fᵢ=v/λᵢ, wobei v die Oberflächenschallgeschwindigkeit ist. Durch Auswahl der anliegenden Frequenz von f₁ bis fₙ über fᵢ mit der Wechselspannungsquelle 69 kann also der Ort xᵢ ausgewählt werden, in dem die Oberflächenwelle generiert werden soll. Nur dort wird eine Oberflächenwelle in Richtung 91 erzeugt. Durch Änderung der Frequenz fᵢ verschiebt sich dieser Oberflächenwellenstrahl 91 gemäß der eingezeichneten Pfeilrichtung 93. Auf diese Weise läßt sich sehr bestimmt eine lokale Oberflächenwelle erzeugen, deren Ausbreitungsbereich sehr präzise durch Einstellung der Frequenz eingestellt werden kann.

In Fig. 5 wird ein derartiger getaperter Interdigitaltransducer 61 eingesetzt, um verschiedene Reservoirs 71, 73, 75 anzusteuern. Diese Reservoirs 71, 73, 75 sind über Leiterbahnen 83, 85, 87 mit Auffangreservoirs 81, 79, 77 verbunden. Befindet sich in den Reservoirs 71, 73, 75 jeweils Materie, so läßt sich durch Auswahl der Frequenz, die an den Interdigitaltransducer 61 angelegt wird, bestimmen, welche Materiemenge mit einem Oberflächenwellenimpuls belegt werden soll. Nur diese Materiemenge wird sich dann in das ihr zugehörige Auffangreservoir bewegen. Wird z. B. eine kleinere Frequenz angelegt, so ist der Interdigitaltransducer in dem Bereich in Resonanz, in dem die einzelnen Finger weiter voneinander entfernt sind und die Materie wird aus dem Reservoir 75 durch Impulsübertrag aus der Oberflächenwelle entlang der Leiterbahn 87 zum Reservoir 77 bewegt. Bei Anlegen einer höheren Frequenz ist der Interdigitaltransducer an einer Stelle in Resonanz, in der die einzelnen Finger näher beieinander liegen. Zum Beispiel wird dann nur die Materiemenge, die sich in dem Reservoir 71 befindet, von dem Impuls der Oberflächenwelle getroffen und nur sie bewegt sich entlang der Trajektorie 83 in das Reservoir 81. Mit einer solchen Ausführungsform ist also das gezielte Ansteuern bestimmter Materiemengen möglich.

Wird eine Materiemenge, die über alle Bereiche 71, 73 und 75 verteilt ist, aufgebracht, so kann durch gezielte örtlich bestimmte Einstrahlung einer Oberflächenwelle entsprechender Frequenz ein einzelner dieser Bereiche angesteuert werden, um die Materiemenge zu teilen.

Abweichend von getaperten Interdigitaltransducern können auch sogenannte fokussierende Interdigitaltransducer oder solche, bei denen der jeweilige Fingerabstand entlang der Achse des Wandlers sich digital, d. h. stufenförmig, ändert, um bestimmte Bereiche der Oberfläche zur Beschickung mit der Oberflächenwelle in Abhängigkeit der angelegten Frequenz auszuwählen, vorgesehen sein.

Bei den bisher geschilderten Ausführungsformen ist eine speziell präparierte Leiterbahn auf der Chipoberfläche vorgesehen. Soll sich die Materiemenge jedoch genau in Richtung der Ausbreitungsrichtung einer Oberflächenwelle bewegen, ist eine solche Präparation nicht notwendig, da in der Regel die Materiemenge durch ihre Oberflächenspannung zusammengehalten wird.

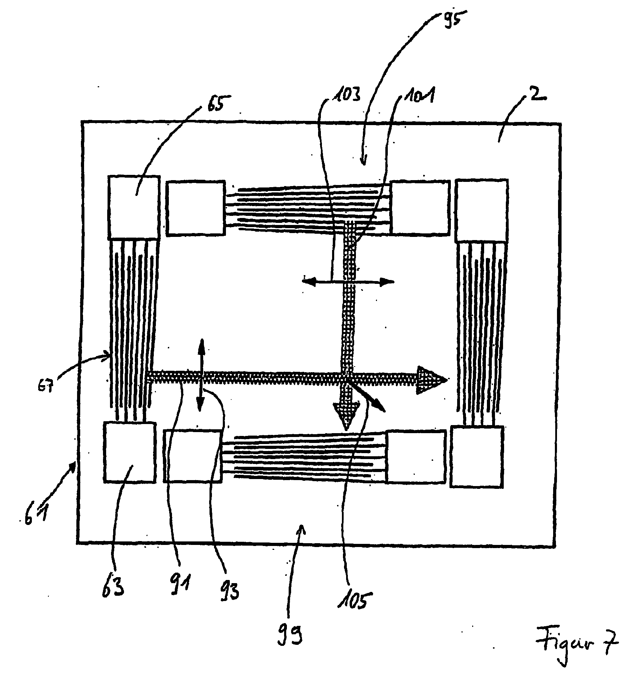

Die Materiemenge bewegt sich dann entlang des Impulses bzw. der Summe von Impulsen, wenn mehrere Oberflächenwellen auf die Materiemenge geschickt werden. Eine solche Ausführungsform hat den Vorteil, daß die Bewegung der Materiemenge nicht auf eine vorbestimmte Leiterbahn beschränkt ist, sondern durch entsprechende Anordnung der Interdigitaltransducer bzw. Ansteuerung der einzelnen Interdigitaltransducer die Bewegung in ihrer Richtung gesteuert werden kann. In Fig. 7 ist dies schematisch angedeutet. Gezeigt sind vier Interdigitaltransducer 61, 95 und 99. Exemplarisch für die vier Interdigitaltransducer sind für den ersten Transducer 61 die Finger mit 67 bezeichnet und die Elektroden mit 65 bzw. 63. Wiederum sind die Interdigitaltransducer als getaperte Transducer ausgebildet. Im gezeigten Beispiel erzeugt der erste Interdigitaltransducer 61 eine Oberflächenwelle in Richtung 91. Durch Auswahl der Frequenz kann es, wie mit Bezug zur Fig. 6 beschrieben, erreicht werden, daß der Bereich, der von der Oberflächenwelle überstrichen wird, sich entlang des Pfeils 93 verändert. In ähnlicher Weise wirkt der zweite Interdigitaltransducer 95 zur Erzeugung einer Oberflächenwelle im Bereich 101. Änderung der Eingangsfrequenz verschiebt den Ausbreitungsbereich der Oberflächenwelle in Richtung 103. Ein im Kreuzungspunkt der Ausbreitungsbereiche befindlichen Materiemenge erfährt einen Gesamtimpuls der Oberflächenwelle in Richtung 105. Durch geeignete Auswahl der Ausbreitungsbereiche bzw. Auswahl der Lage der Ausbreitungsbereiche durch Einstellung der Frequenz an den unterschiedlichen Transducem 67 und 95 kann die Impulsrichtung 105 frei eingestellt werden. Dabei kann die Amplitude der einzelnen Oberflächenwellen über die Amplitude des angelegten Wechselspannungssignals an die Interdigitaltransducer bestimmt werden, so daß auch der Winkel des resultierenden Impulses 105 geändert werden kann.

Durch Anlegen einer Wechselspannung an die Interdigitaltransducer 99 kann eine Bewegung in der anderen Richtung erzeugt werden.

Selbstverständlich können auch andere Geometrien von Interdigitaltransducem gewählt werden, um Bewegungen in gewünschte Richtungen erzeugen zu können.

Sind die einzelnen Interdigitaltransducer auf dem Chip 2 derart ausgestaltet, daß sich die Resonanzfrequenzbereiche nicht überdecken, und sind die einzelnen Interdigitaltransducer parallel geschaltet, so kann mit Hilfe der angelegten Frequenz der Interdigitaltransducer ausgewählt werden, der eine Oberflächenwelle erzeugen soll. So läßt sich einfach durch Anlegen einer bestimmten Frequenz ein einzelner Interdigitaltransducer auswählen.

Die einzelnen Ausführungsformen lassen sich auch drahtlos fernansteuern. Einstrahlen einer entsprechenden Frequenz in die einzelnen Transducer ermöglicht die drahtlose Ansteuerung und Generierung der dazugehörigen Oberflächenwelle. Dazu können die einzelnen Transducer mit einer entsprechenden Antenneneinrichtung versehen sein. Bei einer Ausführungsform, bei der die einzelnen Transducer nicht denselben Resonanzfrequenzbereich haben, kann durch einfache Auswahl der eingestrahlten Frequenz drahtlos entschieden werden, welcher der Transducer gerade eine Oberflächenwelle erzeugen soll und auf eine Materiemenge geschickt werden soll.

Bei einer solchen Ausführungsform wird z. B. die Hochfrequenzquelle 69 der Fig. 6 bzw. 5 durch eine Antenne ersetzt.

Selbstverständlich sind beliebige Kombinationen der einzelnen Ausführungsformen auf einem Chip denkbar, um verschiedene Prozesse durchführen zu können. Erfindungsgemäße Vorrichtungen können auch mit entsprechenden Analysestationen kombiniert werden. Besonders vorteilhaft ist, daß gerade auf Halbleitersubstraten solche Analysestationen gleichzeitig und integriert und damit einfach und kostengünstig hergestellt werden können. Insbesondere seien hier integrierte Lichtquellen, wie Halbleiter-Laserdioden und optische Detektoren zur Fluoreszenzanalyse, Ver fahren zur Messung der elektrischen und dielektrischen Eigenschaften der transportierten Materie sowie der Massen- und Größenverteilung der Materiemengen genannt. Durch miniaturisierte Heizungen oder Bereiche mit statisch einstellbaren elektrischen Feldern etc. eröffnet sich ein weites Feld für mögliche Anwendungen, die von der Physik über die Chemie bis hin zur Biologie und Gentechnik reichen. Das erfindungsgemäße Verfahren bzw. die erfindungsgemäße Vorrichtung, machen es möglich, kleinste Mengen von Materie gezielt auf der Oberfläche eines Festkörpers zu bewegen, zu portionieren und zu vereinzeln. Dabei können auch mehrere unter Umständen verschiedene Materiemengen getrennt voneinander unabhängig verschoben werden. Eine mögliche Anwendung wäre somit z. B. eine physikochemische Reaktion aus zwei oder mehr Komponenten kleinster Stoffmengen an einem vorherbestimmbaren Ort auf dem Festkörper auszulösen. So sind Anwendungen in der Nano- oder Femtochemie möglich. Auch feste Materialien, wie z. B. Cluster oder geringste Stoffmengen eines oder mehrerer chemischer Reagenzien oder ähnlichem können gezielt auf der Oberfläche eines Festkörpers verschoben werden. Somit ist man auch in der Lage, Muster aus Feststoffen kleinster Menge an der Oberfläche zu definieren.

Gerade die Kombinationen mit zusätzlichen Analysestationen, die integriert auf demselben Festkörpermaterial erzeugt werden, ermöglichen viele Ausführungsformen, die in ihrer Gesamtheit als "Baukasten" für ein "Labor auf dem Chip" ("Lab-on-the-chip") dienen. Der modulare Aufbau eines solchen "Lab-on-a-chip" erlaubt es darüber hinaus, die Eigenschaften des Gesamtsystems durch Verknüpfung der entsprechenden Eigenschaften der einzelnen Elemente mittels geeigneter Software zu simulieren.

Durch die einfache Herstellungsweise mit bekannten planaren Technologien ist zudem eine kostengünstige Herstellung und anwenderspezifische Ausgestaltung leicht zu erreichen.

## Patentansprüche

1. Verfahren zur gezielten und gerichteten Manipulation kleiner Materiemengen auf Festkörperoberflächen,
- bei dem mit Hilfe von einer oder mehrerer akustischer Oberflächenwellen ein Impuls entlang der Festkörperoberfläche erzeugt wird, wobei die Oberflächenwellen mit mindestens einer Oberflächenwellenerzeugungseinrichtung (1, 27, 61, 95, 97, 99) generiert werden, und
- der Impuls (16, 36, 105) mit mindestens einer Materiemenge in Wechselwirkung gebracht wird, um eine Bewegung der Materiemenge auf der Oberfläche in einer gewünschten Richtung (17, 39) zu bewirken,
wobei sich die Materiemenge auf einem funktionalisierten Bereich der Oberfläche befindet, der sich durch eine Modulation der Benetzungseigenschaften ergibt.

2. Verfahren nach Anspruch 1, bei dem durch Funktionalisierung von Teilen (15, 49, 83, 85, 87) der Festkörperoberfläche zumindest eine definierte Trajektorie für die Materiemenge vorgegeben ist, und die mindestens eine Materiemenge durch den Impulsübertrag entlang dieser mindestens einen Trajektorie bewegt wird.

3. Verfahren nach einem der Ansprüche 1 oder 2, bei dem die Modulation der Benetzungseigenschaften durch lithographische Definition mindestens eines hydrophoben und mindestens eines im Vergleich dazu hydrophilen bzw. mindestens eines lipophoben und mindestens eines im Vergleich dazu lipophilen Bereiches erreicht wird.

4. Verfahren nach einem der Ansprüche 1 oder 2, bei dem die Modulation der Benetzungseigenschaften durch Silanisierung dieses Teils der Festkörperoberfläche erreicht wird.

5. Verfahren nach einem der Ansprüche 1 bis 4, bei dem die akustischen Oberflächenwellen durch elektrische Anregung erzeugt werden.

6. Verfahren nach einem der Ansprüche 1 bis 5, bei dem zur Erzeugung der akustischen Oberflächenwellen Interdigitalwandler (1, 27, 31, 61, 95, 97, 99) eingesetzt werden.

7. Verfahren nach einem der Ansprüche 5 oder 6, bei dem die akustischen Oberflächenwellen mittels des piezoelektrischen Effekts in einem piezoelektrischen Substrat bzw. einem piezoelektrischen Bereich eines Substrates erzeugt werden.

8. Verfahren nach Anspruch 7, bei dem eine piezoelektrische Schicht auf der Substratoberfläche zur Erzeugung der Oberflächenwellen eingesetzt wird, die derart gewählt ist, daß sie andere Benetzungseigenschaften aufweist als die restliche Substratoberfläche.

9. Verfahren nach einem der Ansprüche 1 bis 8, bei dem der Impulsübertrag zwischen der mindestens einen akustischen Oberflächenwelle und der mindestens einen Materiemenge durch die im piezoelektrischen Substrat oder mindestens im piezoelektrischen Bereich der Festkörperoberfläche die Welle begleitenden elektrischen Felder vermittelt wird.

10. Verfahren nach einem der Ansprüche 1 bis 9, bei dem der Impulsübertrag zwischen der mindestens einen akustischen Oberflächenwelle und der mindestens einen Materiemenge durch die die Oberflächenwelle begleitende mechanische Deformation der Festkörperoberfläche vermittelt wird.

11. Verfahren nach einem der Ansprüche 1 bis 10, bei dem Oberflächenwellen verschiedener Frequenzen (f₁ ..., fₙ) durch verschiedene Bereiche der Oberfläche (5, 21, 37; x₁, ..., xₙ) geschickt werden.

12. Verfahren nach Anspruch 11, bei dem zur Erzeugung von Oberflächenwellen in verschiedenen Bereichen (5, 21) der Oberfläche mindestens zwei Erzeugungseinrichtungen (1, 27, 31, 61, 95, 97, 99) für Oberflächenwellen mit unterschiedlichen Betriebsfrequenzen eingesetzt werden.

13. Verfahren nach Anspruch 6 und Anspruch 12, bei dem die mindestens zwei Erzeugungseinrichtungen Interdigitalwandler mit jeweils konstantem aber unterschiedlichem Fingerabstand umfassen.

14. Verfahren nach Anspruch 6 und Anspruch 11, bei dem zur Erzeugung von Oberflächenwellen verschiedener Frequenz zumindest ein Interdigitalwandler (61, 95, 97, 99) mit nicht konstantem Fingerabstand eingesetzt wird.

15. Verfahren nach einem der Ansprüche 1 bis 14, bei dem zur Festlegung von Betrag und Richtung des Geschwindigkeitsvektors der mindestens eine Materiemenge die Überlagerung mindestens zweier akustischer Oberflächenwellen eingesetzt wird.

16. Verfahren nach einem der Ansprüche 1 bis 15, bei dem mindestens eine Materiemenge durch mindestens eine akustische Oberflächenwelle in mindestens zwei kleinere Untermengen geteilt wird.

17. Verfahren nach einem der Ansprüche 1 bis 16, bei dem mindestens eine Materiemenge innerhalb mindestens eines Bereiches der Festkörperoberfläche bezüglich mindestens einer physikalischen, chemischen oder biologischen Eigenschaft analysiert wird.

18. Verfahren nach Anspruch 17, bei dem ein Teil der mindestens einen Materiemenge entweder vor oder nach der Analyse von der restlichen Materiemenge separiert wird.

19. Verfahren nach einem Ansprüche 17 oder 18, bei dem die mindestens eine Materiemenge durch Wechselwirkung mit mindestens einer akustischen Oberflächenwelle bezüglich ihrer Größe, ihrer Masse, ihrer optischen, magnetischen, elektrischen und/oder dielektrischen Eigenschaften analysiert wird.

20. Verfahren nach einem der Ansprüche 1 bis 19, bei dem zumindest ein Teil der zumindest einen Materiemenge in mindestens einem Bereich auf der Festkörperoberfläche durch chemische, physikalische oder biologische Prozesse modifiziert wird.

21. Verfahren nach Anspruch 20, bei dem der zumindest eine Teil der mindestens einen Materiemenge durch Funktionalisierung mindestens eines Bereiches der Festkörperoberfläche hinsichtlich ihrer physikalischen, chemischen oder biologischen Eigenschaften modifiziert wird.

22. Verfahren nach einem der Ansprüche 17 bis 21, bei dem die zu analysierende bzw. zu modifizierende mindestens eine Materiemenge auf mindestens einem Bereich der Festkörperoberfläche durch Modulation oder Beschichtung dieses Bereiches der Festkörperoberfläche über Chemisorption oder Physisorption reversibel und vorübergehend immobilisiert wird.

23. Verfahren nach einem der Ansprüche 1 bis 22, bei dem mindestens zwei Materiemengen in mindestens einem Bereich (25) der Festkörperoberfläche durch gezielte und gerichtete Bewegung (17, 20) zum Zweck ihrer Mischung und/oder mindestens einer physikalischen, chemischen oder biologischen Reaktion in Kontakt gebracht werden.

24. Verfahren nach Anspruch 23, bei dem mindestens zwei Materiemengen mit Hilfe zweier gegeneinander laufenden Oberflächenwellen aufeinander zu bewegt werden.

25. Verfahren nach einem der Ansprüche 1 bis 24, bei dem Oberflächenwellen aus verschiedenen Richtungen auf die mindestens eine Materiemenge geschickt werden, um eine Durchmischung der mindestens einen Materiemenge zu erreichen.

26. Verfahren nach einem der Ansprüche 1 bis 25, bei dem die mindestens eine Oberflächenwelle durch drahtloses Einstrahlen mindestens einer elektromagnetischen Welle in die mindestens eine Erzeugungseinrichtung (1, 27, 31, 61, 95, 97, 99) für Oberflächenwellen generiert wird.

27. Verfahren nach einem der Ansprüche 1 bis 26, bei dem mindestens eine weitere Oberflächenwelle aus einer Richtung (37) auf die mindestens eine Materiemenge eingestrahlt wird, die nicht der ursprünglichen Bewegungsrichtung (17) der Materiemenge entspricht.

28. Verfahren nach einem der Ansprüche 1 bis 27, bei dem mindestens eine Oberflächenwelle in etwa tangential auf mindestens eine Materiemenge geschickt wird, um diese in Rotation zu versetzen.

29. Vorrichtung zur gezielten und gerichteten Manipulation mindestens einer Materiemenge auf einer Festkörperoberfläche mit
- mindestens einer Einrichtung (1, 27, 31, 61, 95, 97, 99) zur Erzeugung von akustischen Oberflächenwellen auf der Festkörperoberfläche in zumindest einer Ausbreitungsrichtung (16, 21, 36, 91, 101),
- einem Wechselwirkungsbereich, in dem die Materiemenge mit der mindestens einen Oberflächenwelle in Wechselwirkung treten kann, um durch einen Impulsübertrag von der Oberflächenwelle bzw. der Oberflächenwellen eine Bewegung der Materiemenge entlang der Oberfläche zu bewirken,
wobei der Wechselwirkungsbereich durch eine Modulation der Benetzungseigenschaften der Festkörperoberfläche definiert ist.

30. Vorrichtung nach Anspruch 29 mit mindestens einer definierten Trajektorie (15, 49, 83, 85, 87) für die Bewegung der Materiemenge, die durch die Modulation der Benetzungseigenschaften der Festkörperoberfläche gebildet wird.

31. Vorrichtung nach einem der Ansprüche 29 oder 30, bei der die Festkörperoberfläche teilweise silanisiert ist, um die Modulation der Benetzungseigenschaften zu erreichen.

32. Vorrichtung nach einem der Ansprüche 29 bis 31, bei der die Modulation der Benetzungseigenschaften durch mindestens einen hydrophoben und mindestens einen im Vergleich dazu hydrophilen bzw. mindestens einen lipophoben und mindestens einen im Vergleich dazu lipophilen Bereich gebildet wird.

33. Vorrichtung nach Anspruch 32, bei der der mindestens eine hydrophobe und der mindestens eine hydrophile bzw. der mindestens eine lipophobe und mindestens eine lipophile Bereich lithographisch definiert sind.

34. Vorrichtung nach einem der Ansprüche 32 oder 33, bei der die hydrophoben und/oder hydrophilen bzw. lipophoben und/oder lipophilen Bereiche eine entsprechende Beschichtung umfassen.

35. Vorrichtung nach einem der Ansprüche 29 bis 34, bei der die Modulation der Benetzungseigenschaften durch laterale Mikro- oder Nanostrukturierung erreicht worden ist.

36. Vorrichtung nach einem der Ansprüche 30 bis 35, bei der die mindestens eine definierte Trajektorie (15) eine Verzweigung (14) zu mindestens einer weiteren definierten Trajektorie aufweist.

37. Vorrichtung nach einem der Ansprüche 30 bis 36, bei der die mindestens eine definierte Trajektorie einen im wesentlichen runden Bereich (49) umfaßt und die mindestens eine Erzeugungseinrichtung (1) für Oberflächenwellen derart angeordnet ist, daß eine Oberflächenwelle in tangentialer Richtung dieses runden Bereiches (49) erzeugt werden kann.

38. Vorrichtung nach einem der Ansprüche 30 bis 37, die ein Netzwerk aus definierten Trajektorien und Erzeugungseinrichtungen für Oberflächenwellen derart umfaßt, daß die mindestens eine Materiemenge entlang der Trajektorien bewegt werden kann.

39. Vorrichtung nach einem der Ansprüche 29 bis 30 mit mindestens einer Erzeugungseinrichtung (31) zur Erzeugung einer Oberflächenwelle in einer Richtung (36), die seitlich auf eine sich entlang einer Trajektorie bewegende Materiemenge trifft.

40. Vorrichtung nach einem der Ansprüche 29 bis 39 mit einer definierten Trajektorie zu einem externen Vorratsreservoir.

41. Vorrichtung nach einem der Ansprüche 29 bis 40 mit einer definierten Trajektorie zu einem externen Auffangreservoir.

42. Vorrichtung nach einem der Ansprüche 29 bis 40, bei der mindestens ein Teil der Festkörperoberfläche als Vorratsreservoir (11, 23, 71, 73, 75) für die Lieferung der mindestens einen Materiemenge ausgelegt ist.

43. Vorrichtung nach einem der Ansprüche 29 bis 42, bei der mindestens ein Teil der Festkörperoberfläche als Auffangreservoir (13, 25, 45, 47, 51, 53, 77, 79, 81) ausgelegt ist.

44. Vorrichtung nach einem der Ansprüche 29 bis 43 mit einem piezoelektrischen Substrat, bzw. einem Substrat mit einem piezoelektrischen Bereich.

45. Vorrichtung nach Anspruch 44, bei der sich auf dem piezoelektrischen Substrat bzw. oberhalb des piezoelektrischen Bereiches eine Schonschicht einer Dicke befindet, die kleiner ist, als die Eindringtiefe der Oberflächenwelle zur Schonung des zu bewegenden Materiales.

46. Vorrichtung nach Anspruch 45, bei dem die Schonschicht Quarz umfaßt.

47. Vorrichtung nach Anspruch 44, bei der sich auf einem Substrat mit vorbestimmten Oberflächeneigenschaften eine piezoelektrische Schicht zur Anregung von Oberflächenwellen darin befindet.

48. Vorrichtung nach Anspruch 47, bei der die Oberflächenbenetzungseigenschaften der piezoelektrischen Schicht sich von den Benetzungseigenschaften des umgebenen Substrates unterscheiden.

49. Vorrichtung nach einem der Ansprüche 29 bis 48, bei der mehrere Oberflächenwellenerzeugungseinrichtungen (61, 95) derart angeordnet sind, daß die durch die Oberflächenwellen erzeugten Impulse sich zu einem Gesamtimpuls (105) in Richtung einer gewünschten Bewegungsrichtung addieren.

50. Vorrichtung nach einem der Ansprüche 29 bis 49 mit mindestens zwei Oberflächenwellenerzeugungseinrichtungen, deren räumliche Abstrahlung zumindest teilweise 180 Grad gegeneinander laufend ist.

51. Vorrichtung nach einem der Ansprüche 29 bis 50, bei der ein Bereich der Festkörperoberfläche durch Modulation oder Beschichtung der Festkörperoberfläche über Chemisorption oder Physisorption zur reversiblen und vorübergehenden Immobilisierung der mindestens einen Materiemenge funktionalisiert ist.

52. Vorrichtung nach einem der Ansprüche 29 bis 51, bei der mindestens ein Interdigitalwandler (1, 27, 31, 61, 95, 97, 99) als Einrichtung zur Erzeugung von Oberflächenwellen vorgesehen ist.

53. Vorrichtung nach einem der Ansprüche 29 bis 52, bei der die mindestens eine Erzeugungseinrichtung (61, 95, 97, 99) für Oberflächenwellen derart ausgelegt ist, daß der Ausbreitungsbereich (x₁, ..., xₙ) der Oberflächenwellen sich mit der Frequenz (f₁, ..., fₙ) ändert.

54. Vorrichtung nach Anspruch 53, bei der zur Erzeugung von Oberflächenwellen mit verschiedenen Ausbreitungsbereichen mehrere Erzeugungseinrichtungen (1, 27, 31, 61, 95, 97, 99) für Oberflächenwellen verschiedener Betriebsfrequenz vorgesehen sind.

55. Vorrichtung nach Anspruch 54, bei der mehrere Interdigitalwandler mit konstantem aber untereinander unterschiedlichem Fingerabstand vorgesehen sind.

56. Vorrichtung nach Anspruch 53, bei der zur Erzeugung von Oberflächenwellen mit verschiedenem Ausbreitungsbereich mindestens ein Interdigitalwandler (61, 95, 97, 99) mit nicht konstantem Fingerabstand vorgesehen ist.

57. Vorrichtung nach einem der Ansprüche 29 bis 56 mit einem Bereich, in dem die Festkörperoberfläche mit einem Element zur lokalen Erwärmung versehen ist.

58. Vorrichtung nach einem der Ansprüche 29 bis 57 mit mindestens einer Antenneneinrichtung zur drahtlosen Einstrahlung einer elektromagnetischen Welle in die mindestens eine Erzeugungseinrichtung (1, 27, 31, 61, 95, 97, 99) für Oberflächenwellen.

59. Verwendung eines Verfahrens nach einem der Ansprüche 1 bis 28 oder einer Vorrichtung nach einem der Ansprüche 29 bis 58 zur gezielten und gerichteten Manipulation von Flüssigkeiten, Gasen, fester Körper oder Kombinationen, Mischungen und/oder Dispersionen davon.

60. Verwendung eines Verfahrens nach einem der Ansprüche 1 bis 28 oder einer Vorrichtung nach einem der Ansprüche 29 bis 58 zur gezielten und gerichteten Manipulation anorganischer Reagenzien oder organischem Material wie Zellen, Molekülen, Makromolekülen oder genetischen Materialien, die in vitro oder in vivo dargestellt sind.

61. Verwendung eines Verfahrens nach einem der Ansprüche 1 bis 28 oder einer Vorrichtung nach einem der Ansprüche 29 bis 58 zur Analyse, Synthese, Trennung, Durchmischung oder Portionierung einer kleinen Materiemenge.

62. Verwendung eines Verfahrens nach einem der Ansprüche 1 bis 28 zur Bewegung einer kleinen Materiemenge von einem Vorrats- (11, 23, 71, 73, 75) zu einem Auffangreservoir (13, 25, 45, 47, 51, 53, 77, 79, 81).

63. Verwendung eines Verfahrens nach Anspruch 28 zur Zentrifugierung einer kleinen Materiemenge.

## Claims

1. A process for specific and directed manipulation of small quantities of matter on solid-body surfaces,
- in which, with the aid of one or more acoustic surface waves, an impulse is generated along the solid-body surface, whereby the surface wave is generated with at least one surface-wave generator (1, 27, 61, 95, 97, 99), and
- the impulse (16, 36, 105) is made to interact with at least one quantity of matter in order to cause movement on the surface in a desired direction (17, 39),
wherein the quantity of matter is located on an area of the surface which is formed by a modulation of the wetting properties.

2. A process according to claim 1, in which, by functionalizing parts (15, 49, 83, 85, 87) of the solid-body surface, at least one defined trajectory is set for the quantity of matter and the at least one quantity of matter is moved by the impulse transfer along this at least one trajectory.

3. A process according to one of claims 1 or 2, in which the modulation of the wetting properties is achieved by lithographic definition of at least one hydrophobic region and at least one region that is hydrophilic in comparison to it or at least one lipophobic region and at least one region that is lipophilic in comparison to it.

4. A process according to one of claims 1 or 2, in which the modulation of the wetting properties is achieved through silanization of this part of the solid-body surface.

5. A process according to one of claims 1 through 4, in which the acoustic surface waves are generated by electric stimulation.

6. A process according to one of claims 1 through 5, in which interdigital converters (1, 27, 31, 61, 95, 97, 99) are used to generate the acoustic surface waves.

7. A process according to one of claims 5 or 6, in which the acoustic surface waves are generated by means of the piezoelectric effect in a piezoelectric substrate or a piezoelectric region of a substrate.

8. A process according to claim 7, in which a piezoelectric layer is used on the substrate surface to generate the surface waves that is selected in such a way that it has different wetting properties than the rest of the substrate surface.

9. A process according to one of claims 1 through 8, in which the impulse transfer between the at least one acoustic surface wave and the at least one quantity of matter is transmitted by the electric fields accompanying the wave in the piezoelectric substrate or at least in the piezoelectric region of the solid-body surface.

10. A process according to one of claims 1 through 9, in which the impulse transfer between the at least one acoustic wave and the at least one quantity of matter is transmitted by the mechanical deformation of the solid-body surface that accompanies the surface wave.

11. A process according to one of claims 1 through 10, in which surface waves of different frequencies (f1, ..., fn) are sent through different regions of the surface (5, 21, 37; x1, ..., xn).

12. A process according to claim 11, in which, to generate surface waves in different regions (5, 21) of the surface, at least two generators (1, 27, 31, 61, 95, 97, 99) for surface waves with different operating frequencies are used.

13. A process according to claim 6 and claim 12, in which the at least two generators include interdigital converters with constant but different distances between the fingers of each.

14. A process according to claim 6 and claim 11, in which, to generate surface waves of different frequencies, at least one interdigital converter (61, 95, 97, 99) with non-constant distances between the fingers is used.

15. A process according to one of claims 1 through 14, in which superposition of at least two acoustic surface waves is used to establish the size and direction of the velocity vector of the at least one quantity of matter.

16. A process according to one of claims 1 through 15, in which the at least one quantity of matter is divided by at least one acoustic surface wave into at least two smaller subquantities.

17. A process according to one of claims 1 through 16, in which the at least one quantity of matter is analyzed within at least one region of the solid-body surface is regard to at least one physical, chemical, or biological characteristic.

18. A process according to claim 17, in which a part of the at least one quantity of matter is separated from the rest of the quantity of matter, either before or after the analysis.

19. A process according to one of claims 17 or 18, in which the at least one quantity of matter is analyzed with the help of interaction with at least one acoustic surface wave in regard to its size, its mass, its optical, magnetic, electric, and/or dielectric properties.

20. A process according to one of claims 1 through 19, in which at least one part of the at least one quantity of matter is modified in at least one region on the solid-body surface by chemical, physical, or biological processes.

21. A process according to claim 20, in which the at least one part of the at least one quantity of matter is modified by functionalizing at least one region of the solid-body surface with respect to its physical, chemical, or biological properties.

22. A process according to one of claims 17 through 21, in which the at least one quantity of matter to be analyzed or modified is immobilized reversibly and temporarily on at least one region of the solid-body surface by modulation or coating of this region of the solid-body surface through chemisorption or physisorption.

23. A process according to one of claims 1 through 22, in which at least two quantities of material are brought into contact in at least one region (25) of the solid-body surface by specific and directed movement (17, 20) for purposes of being mixed and/or at least one physical, chemical, or biological reaction.

24. A process according to claim 23, in which at least two quantities of matter are moved toward each other with the aid of two surface waves running in opposite directions.

25. A process according to one of claims 1 through 24, in which surface waves are sent from various directions to the at least one quantity of matter, in order to achieve a mixing of the at least one quantity of matter.

26. A process according to one of claims 1 through 25, in which at least one surface wave is generated by wireless irradiation of at least one electromagnetic wave into at least one generator (1, 27, 31, 61, 95, 97, 99) for surface waves.

27. A process according to one of claims 1 through 26, in which at least one additional surface wave is irradiated from a direction (37) onto the at least one quantity of matter that does not correspond to the original direction of movement (17) of the quantity of matter.

28. A process according to one of claims 1 through 27, in which at least one surface wave is sent approximately tangentially onto at least one quantity of matter, in order to put it in rotation.

29. A device for specific and directed manipulation of at least one quantity of matter on a solid-body surface, with:
- at least one device (1, 27, 31, 61, 95, 97, 99) for generating acoustic surface waves on the solid-body surface in at least one spreading direction (16, 21, 36, 91, 101),
- an interaction region, in which the quantity of matter can interact with the at least one surface wave, in order to cause a movement of the quantity of matter along the surface through an impulse transfer from the surface wave or surface waves,
wherein the interaction region is defined by a modulation of the wetting properties of the solid-body surface.

30. A device according to claim 29, with at least one defined trajectory (15, 49, 83, 85, 87) for the movement of the quantity of matter, which is formed by the modulation of the wetting properties of the solid-body surface.

31. A device according to one of claims 29 or 30, in which the solid-body surface is partially silanized, in order to achieve a modulation of the wetting properties.

32. A device according to one of claims 29 through 31, in which the modulation of the wetting properties is formed by at least one hydrophobic region and at least one region that is hydrophilic in comparison to it or at least one lipophobic region and at least one region that is lipophilic in comparison to it.

33. A device according to claim 32, in which at least one hydrophobic region and at least one hydrophilic region or at least one lipophobic region and at least one lipophilic region are defined lithographically.

34. A device according to one of claims 32 or 33, in which the hydrophobic and/or hydrophilic or the lipophobic and/or lipophilic regions include a corresponding coating.

35. A device according to one of claims 29 through 34, in which the modulation of the wetting properties is achieved by lateral micro- or nanostructuring.

36. A device according to one of claims 30 through 35, in which the at least one defined trajectory (15) has a branch (14) to at least one additional defined trajectory.

37. A device according to one of claims 30 through 36, in which the at least one defined trajectory includes an essentially round region (49) and the at least one generator (1) for surface waves is arranged in such a way that a surface wave can be generated in a direction tangential to this round region (49).

38. A device according to one of claims 30 through 37, that includes a network of defined trajectories and generators for surface waves, such that the at least one quantity of matter can be moved along the trajectories.

39. A device according to one of claims 29 through 30, with at least one generator (31) to generate a surface wave in a direction (36) that meets the quantity of matter moving along a trajectory from the side.

40. A device according to one of claims 29 through 39, with a defined trajectory to an external supply reservoir.

41. A device according to one of claims 29 through 40, with a defined trajectory to an external receiving reservoir.

42. A device according to one of claims 29 through 40, in which at least one part of the solid-body surface is designed as a supply reservoir (11, 23, 71, 73, 75) for delivery of at least one quantity of matter.

43. A device according to one of claims 29 through 42, in which at least one part of the solid-body surface is designed as a receiving reservoir (13, 25, 45, 47, 51, 53, 77, 79, 81).

44. A device according to one of claims 29 through 43, with a piezoelectric substrate or a substrate with a piezoelectric region.

45. A device according to claim 44, in which there is a protective layer on the piezoelectric substrate or above the piezoelectric region, with a thickness that is less than the penetration depth of the surface wave, to protect the material to be moved.

46. A device according to claim 45, in which the protective layer includes quartz.

47. A device according to claim 44, in which there is a piezoelectric layer on a substrate with predetermined surface characteristics to stimulate surface waves therein.

48. A device according to claim 47, in which the surface-wetting properties of the piezoelectric layer are different from the wetting properties of the surrounding substrate.

49. A device according to one of claims 29 through 48, in which several surface-wave generators (61, 95) are arranged in such a way that the impulses generated by the surface waves are added to give a total impulse (105) in the direction of a desired direction of movement.

50. A device according to one of claims 29 through 49, with at least two surface-wave generators, the spatial radiations of which run 180 degrees opposite to each other, at least in part.

51. A device according to one of claims 29 through 50, in which a region of the solid-body surface is functionalized by modulation or coating of the solid-body surface through chemisorption or physisorption for reversible and temporary immobilization of the at least one quantity of matter.

52. A device according to one of claims 29 through 51, in which at least one interdigital converter (1, 27, 31, 61, 95, 97, 99) is provided as a device for generating surface waves.

53. A device according to one of claims 29 through 52, in which the at least one generator (61, 95, 97, 99) for surface waves is designed in such a way that the spreading region (x1, ..., xn) of the surface waves is changed with the frequency (f1, ..., fn).

54. A device according to claim 53, in which several generators (1, 27, 31, 61, 95, 97, 99) for surface waves of different operating frequencies are provided in order to generate surface waves with different spreading regions.

55. A device according to claim 54, in which the several interdigital converters are provided with constant but different distances between their fingers.

56. A device according to claim 53, in which at least one interdigital converter (61, 95, 97, 99) is provided with non-constant distances between fingers, to generate surface waves with different spreading regions.

57. A device according to one of claims 29 through 56, with a region in which the solid-body surface is provided with an element for local heating.

58. A device according to one of claims 29 through 57, with at least one antenna device for wireless irradiation of an electromagnetic wave into the at least one generator (1, 27, 31, 61, 95, 97, 99) for surface waves.

59. Use of a process according to one of claims 1 through 28 or a device according to one of claims 29 through 58 for specific and directed manipulation of liquids, gases, solid bodies, or combinations, mixtures, and/or dispersions thereof.

60. Use of a process according to one of claims 1 through 28 or a device according to one of claims 29 through 58 for specific and directed manipulation of inorganic reagents or organic materials, such as cells, molecules, macromolecules, or genetic material produced *in vitro* or *in vivo.*

61. Use of a process according to one of claims 1 through 28 or a device according to one of claims 29 through 58 for analyzing, synthesizing, separating, mixing or proportioning a small quantity of matter.

62. Use of a process according to one of claims 1 through 28 for moving a small quantity of matter from a supply reservoir (11, 23, 71, 73, 75) to a receiving reservoir (13, 25, 45, 47, 51, 53, 77, 79, 81).

63. Use of a process according to claim 28 for centrifugation of a small quantity of matter.

## Revendications

1. Procédé pour la manipulation ciblée et dirigée de petites quantités de matière sur des surfaces de corps solides,
- dans lequel on génère une impulsion le long de la surface du corps solide à l'aide d'une ou de plusieurs ondes acoustiques de surface, les ondes de surface étant générées au moyen d'au moins un système générateur d'ondes de surface (1, 27, 61, 95, 97, 99), et
- l'impulsion (16, 36, 105) est amenée en interaction avec au moins une quantité de matière, afin de provoquer un mouvement de la quantité de matière sur la surface dans une direction désirée (17, 39),
dans lequel la quantité de matière se trouve sur une zone fonctionnalisée de la surface, qui résulte d'une modulation des propriétés de mouillage.

2. Procédé selon la revendication 1, dans lequel, par fonctionnalisation de parties (15, 49, 83, 85, 87) de la surface du corps solide, au moins une trajectoire définie pour la quantité de matière est donnée, et ladite au moins une quantité de matière est déplacée le long de cette au moins une trajectoire par transmission d'impulsion.

3. Procédé selon l'une ou l'autre des revendications 1 et 2, dans lequel la modulation des propriétés de mouillage est obtenue par définition lithographique d'au moins une zone hydrophobe et d'au moins une zone hydrophile par comparaison à celle-ci ou d'au moins une zone lipophobe et d'au moins une zone lipophile par comparaison à celle-ci.

4. Procédé selon l'une ou l'autre des revendications 1 et 2, dans lequel la modulation des propriétés de mouillage est obtenue par application de silane sur cette partie de la surface du corps solide.

5. Procédé selon l'une des revendications 1 à 4, dans lequel les ondes acoustiques de surface sont générées par excitation électrique.

6. Procédé selon l'une des revendications 1 à 5, dans lequel on utilise des convertisseurs interdigitaux (1, 27, 31, 61, 95, 97, 99) pour générer des ondes acoustiques de surface.

7. Procédé selon l'une ou l'autre des revendications 5 et 6, dans lequel les ondes acoustiques de surface sont générées au moyen de l'effet piézoélectrique dans un substrat piézoélectrique ou dans une zone piézoélectrique d'un substrat.

8. Procédé selon la revendication 7, dans lequel on utilise une couche piézoélectrique sur la surface de substrat pour générer les ondes de surface, qui est choisie de manière à présenter des propriétés de mouillage autres que celles du reste de la surface de substrat.

9. Procédé selon l'une des revendications 1 à 8, dans lequel la transmission d'impulsion entre ladite au moins une onde acoustique de surface et ladite au moins une quantité de matière est établie par les champs électriques accompagnant l'onde dans le substrat piézoélectrique ou au moins dans la zone piézoélectrique de la surface du corps solide.

10. Procédé selon l'une des revendications 1 à 9, dans lequel la transmission d'impulsion entre ladite au moins une onde acoustique de surface et ladite au moins une quantité de matière est établie par la déformation mécanique, accompagnant l'onde de surface, de la surface de corps solide.

11. Procédé selon l'une des revendications 1 à 10, dans lequel les ondes de surface de différentes fréquences (f₁ ... fₙ) sont envoyées à travers différentes zones de la surface (5, 21, 37 ; x₁, ..., xₙ).

12. Procédé selon la revendication 11, dans lequel, pour générer des ondes de surface dans différentes zones (5, 21) de la surface, on utilise au moins deux systèmes générateurs (1, 27, 31, 61, 95, 97, 99) pour des ondes de surface présentant différentes fréquences de fonctionnement.

13. Procédé selon la revendication 6 et selon la revendication 12, dans lequel lesdits au moins deux systèmes générateurs comprennent des convertisseurs interdigitaux présentant des distances interdigitales constantes mais différentes.

14. Procédé selon la revendication 6 et selon la revendication 11, dans lequel, pour générer des ondes de surface de différentes fréquences, on utilise au moins un convertisseur interdigital (61, 95, 97, 99) présentant une distance interdigitale non constante.

15. Procédé selon l'une des revendications 1 à 14, dans lequel, pour fixer le montant et la direction du vecteur de vitesse de ladite au moins une quantité de matière, on exploite la superposition d'au moins deux ondes acoustiques de surface.

16. Procédé selon l'une des revendications 1 à 15, dans lequel au moins une quantité de matière est subdivisée en au moins deux quantités plus petites par au moins une onde acoustique de surface.

17. Procédé selon l'une des revendications 1 à 16, dans lequel au moins une quantité de matière est analysée à l'intérieur d'au moins une zone de la surface du corps solide à l'égard d'au moins une propriété physique, chimique ou biologique.

18. Procédé selon la revendication 17, dans lequel une partie de ladite au moins une quantité de matière est séparée du reste de la quantité de matière soit avant soit après l'analyse.

19. Procédé selon l'une ou l'autre des revendications 17 et 18, dans lequel ladite au moins une quantité de matière est analysée par interaction avec au moins une onde acoustique de surface à l'égard de sa taille, sa masse, ses propriétés optiques, magnétiques, électriques et/ou diélectriques.

20. Procédé selon l'une des revendications 1 à 19, dans lequel une partie au moins de ladite au moins une quantité de matière est modifiée dans au moins une zone sur la surface du corps solide par des processus chimiques, physiques ou biologiques.

21. Procédé selon la revendication 20, dans lequel ladite au moins une partie de ladite au moins une quantité de matière est modifiée par fonctionnalisation d'au moins une zone de la surface du corps solide à l'égard de ses propriétés physiques, chimiques ou biologiques.

22. Procédé selon l'une des revendications 17 à 21, dans lequel ladite au moins une quantité de matière à analyser ou à modifier est immobilisée réversiblement et temporairement sur au moins une zone de la surface du corps solide par modulation ou par revêtement de cette zone de la surface du corps solide par chimisorption ou par physisorption.

23. Procédé selon l'une des revendications 1 à 22, dans lequel au moins deux quantités de matière sont amenées en contact dans au moins une zone (25) de la surface du corps solide par un mouvement ciblé et dirigé (17, 20) dans le but de leur mélangeage et/ou d'au moins une réaction physique, chimique ou biologique.

24. Procédé selon la revendication 23, dans lequel au moins deux quantités de matière sont déplacées l'une vers l'autre à l'aide de deux ondes de surface se propageant en sens opposés.

25. Procédé selon l'une des revendications 1 à 24, dans lequel des ondes de surface sont envoyées depuis différentes directions vers ladite au moins une quantité de matière, afin d'obtenir un mélangeage de ladite au moins une quantité de matière.

26. Procédé selon l'une des revendications 1 à 25, dans lequel ladite au moins une onde de surface est générée par irradiation sans fil d'au moins une onde électromagnétique dans ledit au moins un système générateur (1, 27, 31, 61, 95, 97, 99) pour les ondes de surface.

27. Procédé selon l'une des revendications 1 à 26, dans lequel au moins une autre onde de surface est irradiée depuis une direction (37) sur ladite au moins une quantité de matière, qui ne correspond pas à la direction de déplacement initiale (17) de la quantité de matière.

28. Procédé selon l'une des revendications 1 à 27, dans lequel au moins une onde de surface est envoyée approximativement tangentiellement sur au moins une quantité de matière, afin de la mettre en rotation.

29. Dispositif pour la manipulation ciblée et dirigée d'au moins une quantité de matière sur une surface de corps solide, comportant
- au moins un système (1, 27, 31, 61, 95, 97, 99) pour générer des ondes acoustiques de surface sur la surface du corps solide dans au moins une direction de propagation (16, 21, 36, 91, 101),
- une zone d'interaction dans laquelle la quantité de matière peut venir en interaction avec ladite au moins une onde de surface, afin de provoquer un mouvement de la quantité de matière le long de la surface par transmission d'impulsion de l'onde de surface ou des ondes de surface,
dans lequel la zone d'interaction est définie par une modulation des propriétés de mouillage de la surface du corps solide.

30. Dispositif selon la revendication 29, présentant au moins une trajectoire définie (15, 49, 83, 85, 87) pour le mouvement de la quantité de matière, qui est formée par la modulation des propriétés de mouillage de la surface du corps solide.

31. Dispositif selon l'une ou l'autre des revendications 29 et 30, dans lequel la surface du corps solide est partiellement revêtue de silane, afin d'obtenir la modulation des propriétés de mouillage.

32. Dispositif selon l'une des revendications 29 à 31, dans lequel la modulation des propriétés de mouillage est obtenue par au moins une zone hydrophobe et au moins une zone hydrophile par comparaison à celle-ci, ou par au moins une zone lipophobe et au moins une zone lipophile par comparaison à celle-ci.

33. Dispositif selon la revendication 32, dans lequel ladite au moins une zone hydrophobe et ladite au moins une zone hydrophile, ou ladite au moins une zone lipophobe et ladite au moins une zone lipophile sont définies par voie lithographique.

34. Dispositif selon l'une ou l'autre des revendications 32 ou 33, dans lequel les zones hydrophobe et/ou hydrophile ou lipophobe et/ou lipophile comprennent un revêtement correspondant.

35. Dispositif selon l'une des revendications 29 à 34, dans lequel la modulation des propriétés de mouillage a été obtenue par micro-structuration ou nano-structuration latérale.

36. Dispositif selon l'une des revendications 30 à 35, dans lequel ladite au moins une trajectoire définie (15) présente une ramification (14) vers au moins une autre trajectoire définie.

37. Dispositif selon l'une des revendications 30 à 36, dans lequel ladite au moins une trajectoire définie comprend une zone (49) sensiblement circulaire et ledit au moins un système générateur (1) pour les ondes de surface est agencé de telle sorte qu'une onde de surface peut être générée en direction tangentielle de cette zone circulaire (49).

38. Dispositif selon l'une des revendications 30 à 37, qui comprend un réseau de trajectoires définies et de systèmes générateurs pour des ondes de surface, de telle sorte que ladite au moins une quantité de matière peut être déplacée le long des trajectoires.

39. Dispositif selon l'une des revendications 29 et 30, comportant au moins un système générateur (31) pour générer une onde de surface dans une direction (36) qui rencontre latéralement une quantité de matière qui se déplace le long d'une trajectoire.

40. Dispositif selon l'une des revendications 29 à 39, présentant une trajectoire définie vers un récipient de réserve externe.

41. Dispositif selon l'une des revendications 29 à 40, comportant une trajectoire définie vers un récipient collecteur externe.

42. Dispositif selon l'une des revendications 29 à 40, dans lequel ladite au moins une partie de la surface du corps solide est conçue sous forme de récipient de réserve (11, 23, 71, 73, 75) pour la livraison de ladite au moins une quantité de matière.

43. Dispositif selon l'une des revendications 29 à 42, dans lequel ladite au moins une partie de la surface du corps solide est conçue sous la forme de récipient collecteur (13, 25, 45, 47, 51, 53, 77, 79, 81).

44. Dispositif selon l'une des revendications 29 à 43, comportant un substrat piézoélectrique ou un substrat pourvu d'une zone piézoélectrique.

45. Dispositif selon la revendication 44, dans lequel il est prévu, sur le substrat piézoélectrique ou au-dessus de la zone piézoélectrique, une couche protectrice d'une épaisseur qui est inférieure à la profondeur de pénétration de l'onde de surface pour protéger la matière à déplacer.

46. Dispositif selon la revendication 45, dans lequel la zone protectrice contient du quartz.

47. Dispositif selon la revendication 44, dans lequel il est prévu, sur un substrat présentant des propriétés de surface prédéterminées, une couche piézoélectrique pour exciter des ondes de surface.

48. Dispositif selon la revendication 47, dans lequel les propriétés de mouillage de surface de la couche piézoélectrique se distinguent des propriétés de mouillage du substrat entouré.

49. Dispositif selon l'une des revendications 29 à 48, dans lequel plusieurs systèmes générateurs d'onde de surface (61, 95) sont agencés de telle sorte que les impulsions générées par les ondes de surface s'additionnent pour donner une impulsion totale (105) dans le sens d'une direction de mouvement désirée.

50. Dispositif selon l'une des revendications 29 à 49, comportant au moins deux systèmes générateurs d'onde de surface dont les rayonnements dans l'espace sont dirigés en sens mutuellement opposés au moins partiellement de 180°.

51. Dispositif selon l'une des revendications 29 à 50, dans lequel une zone de la surface du corps solide est fonctionnalisée par modulation ou par revêtement de la surface du cops solide au moyen d'une chimisorption ou d'une physisorption, dans le but de l'immobilisation réversible et temporaire de ladite au moins une quantité de matière.

52. Dispositif selon l'une des revendications 29 à 51, dans lequel au moins un convertisseur interdigital (1, 27, 31, 61, 95, 97, 99) est prévu comme système pour générer des ondes de surface.

53. Dispositif selon l'une des revendications 29 à 52, dans lequel ledit au moins un système générateur (61, 95, 97, 99) pour les ondes de surface est conçu de telle sorte que la zone de propagation (x₁, ..., xₙ) des ondes de surface se modifie au fur et à mesure de la fréquence (f₁, ..., fₙ).

54. Dispositif selon la revendication 53 dans lequel, pour générer des ondes de surface avec différentes zones de propagation, il est prévu plusieurs systèmes générateurs (1, 27, 31, 61, 95, 97, 99) pour des ondes de surface présentant différentes fréquences de fonctionnement.

55. Dispositif selon la revendication 54, dans lequel il est prévu plusieurs convertisseurs interdigitaux présentant des distances interdigitales constantes mais différentes les unes des autres.

56. Dispositif selon la revendication 53, dans lequel, pour générer des ondes de surface de différentes zones de propagation, il est prévu au moins un convertisseur interdigital (61, 95, 97, 99) présentant une distance interdigitale non constante.

57. Dispositif selon l'une des revendications 29 à 56, comprenant une zone dans laquelle la surface du corps solide est pourvue d'un élément pour l'échauffement local.

58. Dispositif selon l'une des revendications 29 à 57, comportant au moins un dispositif d'antenne pour l'irradiation sans fil d'une onde électromagnétique dans ledit au moins un système générateur (1, 27, 31, 61, 95, 97, 99) pour des ondes de surface.

59. Application d'un procédé selon l'une des revendications 1 à 28 ou d'un dispositif selon l'une des revendications 29 à 58 pour la manipulation ciblée et dirigée de liquides, de gaz, de corps solides ou de combinaisons, de mélanges et/ou de dispersions de ceux-ci.

60. Application d'un procédé selon l'une des revendications 1 à 28 ou d'un dispositif selon l'une des revendications 29 à 58 pour la manipulation ciblée et dirigée de réactifs inorganiques ou de matière organique, comme des cellules, molécules, macromolécules ou des matières génétiques, représentées in vitro ou in vivo.

61. Application d'un procédé selon l'une des revendications 1 à 28 ou d'un dispositif selon l'une des revendications 29 à 58 pour l'analyse, synthèse, séparation, mélangeage ou mise en portions d'une petite quantité de matière.

62. Application d'un procédé selon l'une des revendications 1 à 28 pour déplacer une petite quantité de matière depuis un récipient de réserve (11, 23, 71, 73, 75) vers un récipient collecteur (13, 25, 45, 47, 51, 53, 77,79,81).

63. Application d'un procédé selon la revendication 28 pour la centrifugation d'une petite quantité de matière.
